# EUROPEAN PATENT SPECIFICATION

(11) **EP 1 035 315 B1**
(45) Date of publication and mention of the grant of the patent: **02.08.2006**
(21) Application number: 00104668.9
(22) Date of filing: 03.03.2000
(51) Int. Cl.: F02D 41/40, F02B 37/24, F02D 33/02, F01N 3/20

(54) **Fuel injection control system for diesel engine**
Kraftstoffeinspritzsteuersystem für einen Dieselmotor
Système de commande d'injection de carburant pour moteur à combustion interne

(30) Priority: 10.03.1999 JP 6275599; 07.09.1999 JP 25279999
(43) Date of publication of application: 13.09.2000
(73) Proprietor: Mazda Motor Corporation, Aki-gun, Hiroshima 730-8670 (JP)
(72) Inventor: Saito, Tomoaki, c/o Mazda Motor Corporation, Aki-gun, Hiroshima 730-8670 (JP); Hosoya, Hideki, c/o Mazda Motor Corporation, Aki-gun, Hiroshima 730-8670 (JP)
(74) Representative: Müller-Boré & Partner Patentanwälte

(56) References cited:
- EP-A- 0 449 499
- EP-A- 0 767 303
- EP-A- 0 892 165
- EP-A- 0 990 788
- DE-A- 3 735 169
- DE-A- 3 802 161
- DE-A- 19 639 172
- DE-C- 19 750 226
- JP-A- 63 170 542
- US-A- 4 685 290
- US-A- 4 722 310
- US-A- 5 479 775

## Description

The present invention relates to a fuel injection control system for a direct injection diesel engine which sprays fuel directly into combustion chambers of cylinders of the diesel engine.

One of fuel injection devices of this kind that is conventionally known from, for example, Japanese Unexamined Patent Publication No. 6 - 212961 is adapted and designed such that the fuel injection device, in addition to spraying fuel at a point of time near top dead center (TDC) of a compression stroke in an ordinary manner, sprays an additional small amount of fuel at a point of time between the middle of an expansion stroke and an exhaust stroke in a specified region of engine operating conditions so as to increase density of the deoxidizing components of exhaust gas with an effect of refreshing an exhaust gas purifying catalyst disposed in an exhaust line, in other words an effect of functional restoration of a NOx absorbing matter of the catalyst. Though diesel engines are generally operated in lean conditions in which an average air-fuel ratio A/F in the combustion chamber is equal to or higher than, for example, 18 and the concentration of oxygen in exhaust gas is higher than approximately 4%. In such a lean condition, it is extremely difficult to deoxidize nitrogen oxides (NOx) in exhaust gas from combustion of a lean fuel mixture and thereby to purify the exhaust gas. One of techniques having been developed and used to eliminate the difficulty is utilizing a NOx absorbing matter which, on one hand, absorbs NOx while the concentration of oxygen in exhaust gas is higher and, on the other hand, releases NOx while the concentration of oxygen in exhaust gas is lower. Typically the NOx absorbing matter has the property of inclining to aggravation of NOx absorbing performance with an increase in the amount of absorbed NOx. Therefore, the above mentioned fuel injection device is adapted and designed to spray an additional amount of fuel after the middle of an expansion stroke in advance of a decline in NOx absorbing performance of the NOx absorbing matter so as to lower the concentration of oxygen in the exhaust gas by consuming oxygen in the exhaust gas due to combustion of the additional fuel together with increasing the concentrations of carbon monoxide (CO) and hydrocarbons (HC), which are catalytic or deoxidizing components, in the exhaust gas, thereby promoting release of NOx from the NOx absorbing matter and deoxidizing the released NOx sufficiently with the result of restoring the NOx absorbing performance of the NOx absorbing matter.

Various direct injection diesel engines have further been proposed. One of these direct injection diesel engines which is disclosed in Japanese Unexamined Patent Publication No. 62 - 75051 is adapted and designed to implement multiple fuel injection at a point of time near top dead center of a compression stroke with an adverse effect of weakening spray penetration so as to control adhesion of fuel to the cylinder wall and lower generation of smoke. Another direct injection diesel engine which is disclosed in Japanese Unexamined Patent Publication No. 3 - 160148 is adapted and designed to regulate the amount of fuel injection in terms of time by causing ON/OFF actions of an injection nozzle valve at a timing of delivery of a fuel injection pulse in order to implement ideal control of a rate of fuel injection into a combustion chamber regardless of operational characteristics of fuel injectors.

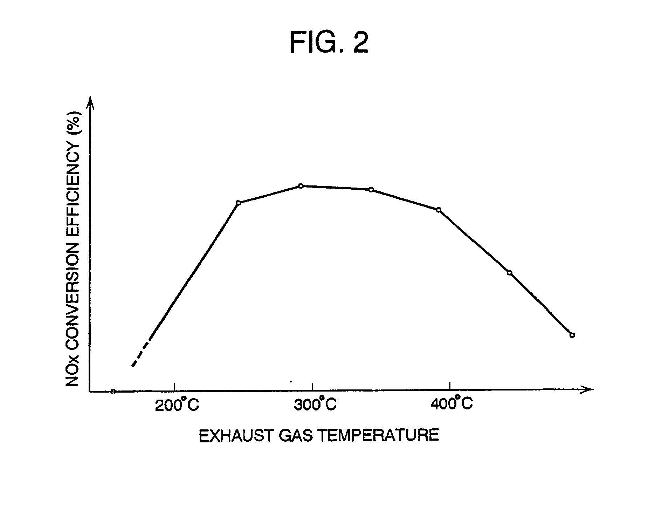

It has been known that a NOx absorbing matter such as used in the fuel injection device disclosed in Japanese Unexamined Patent Publication No. 6 - 212961 depends in NOx absorbing action and NOx releasing action on heated conditions. Specifically, for example, a NOx absorbing matter has the NOx conversion efficiency that is sufficiently high in a specific region of exhaust gas temperatures and, however, sharply decline in a region of lower exhaust gas temperatures in which the catalyst is not warmed up, i.e. before activation, as shown in Figure 2. Because of the temperature dependency of NOx conversion efficiency, in diesel engines that have superior thermal efficiency and are apt to provide exhaust gas with lower temperature as compared to exhaust gas from gasoline engines, the exhaust gas purifying catalyst becomes too low in temperature to display its conversion efficiency sufficiently in some engine operating conditions.

In order to eliminate the problem, it has been known in the art to retard a fuel injection timing so as to enhance after combustion with an effect of elevating the temperature of exhaust gas. However, this technique still causes significant aggravation of fuel combustion condition, as a result of which aggravation of specific fuel consumption and a sharp increase in smoke generation occur. Although it can be thought to deliver a large amount of fuel in excess of a necessary amount of fuel suitable for engine operating conditions, however, this technique causes significant aggravation of specific fuel consumption. Accordingly, these techniques are impracticable as measures to settle these problem.

DE 3802161 A discloses various fuel injection patterns for various engine operation conditions.

US 4685290 discloses a diesel engine with a fuel injection control system performing split fuel injection in order to raise exhaust gas temperature for preheating a filter.

DE 19639172 A discloses a split fuel injection commencing at a point of time between 15° before top dead center of a compression stroke and 5° after top dead center of the compression stroke so as thereby to restrain generation of smoke or at a point of time between 5° and 330° after top dead center of a compression stroke for a rise in exhaust temperature.

US 5479775 discloses a fuel injection system injecting additional fuel that a point of time between 20° and 80° after top dead center of a compression stroke in order to rise an exhaust gas temperature.

DE 1 035 315 A discloses a fuel injection control system for diesel engine in which a split fuel injection is performed. At idling speed, the pilot injection is performed in a range of 10° to 16° CA before TDC and the main injection is started in a range of 2° CA after TDC and an interval is in a range of 3° to 26° CA.

It is the object of the invention to provide a fuel injection control system which controls exhaust gas without incurring aggravation of specific fuel conception and a sharp increase of smoke.

This object is fulfilled by a fuel injection control system having the features disclosed in claim 1. Preferred embodiments are defined in the dependent claims.

The foregoing object of the present invention is achieved by a fuel injection control system which splits an amount of fuel complying with a torque demand of the diesel engine into a plurality of parts of fuel and actuates intermittently a fuel injector to implement split fuel injection of the split parts of fuel. Specifically, the fuel injection control system for a direct injection diesel engine equipped with a fuel injector disposed so as to front the combustion chamber includes fuel injection control means which monitors an operating condition of the diesel engine, determines an amount of fuel to be sprayed through the fuel injector according to the operating condition, and actuates the fuel injector to implement fuel injection of the determined amount of fuel. The fuel injection control system splits the determined amount of fuel into a plurality of parts of fuel and actuates intermittently the fuel injector to implement split fuel injection of the split parts of fuel at specified intervals at a point of time near top dead center of a compression stroke. That is, in general, while fuel sprayed at a point of time near top dead center of a compression stroke spreads in a cone-shaped form as a whole in the combustion chamber, the fuel spray is repeatedly broken up into minute fuel drops (conversion to fine fuel particles) due to friction with air and evaporates from surfaces of the fuel drops, so as to turn fuel vapors (atomization and evaporation). In this instance, in order for the diesel engine to provide improved combustibility, it is desirable to promote atomization of fuel by increasing fuel pressure with an effect of increasing fuel injection velocity, nevertheless, if do so, because air is compressed in the combustion chamber and has high viscosity, fuel drops yielded through preceding fuel injection are caught up by fuel drops yielded through succeeding fuel injection, so as thereby to cohere the latter fuel drops, resulting in difficulty in sufficiently promoting atomization and vaporization of the fuel.

In contrast to the above, according to an embodiment of the present invention in which the fuel injection control system implements primary fuel injection by splitting it into a plurality of times, fuel injection is interrupted for a period between adjacent split fuel injection, so that fuel drops yielded through preceding split fuel injection are prevented from being caught up by fuel drops yielded through succeeding split fuel injection, as a result of which the preceding fuel drops are drastically restrained from an impediment to conversion to fine fuel particles due to cohesion of the preceding and succeeding fuel drops as described above. In consequence, conversion to fine fuel particles, and hence atomization and vaporization of fuel, is sufficiently promoted by pressurizing the fuel, so that a mixture condition of fuel vapors with air is considerably improved with an effect of providing improved combustion, as a result of which specific fuel consumption is improved and generation of smoke is controlled. The split fuel injection provides a relative deduction in the amount of fuel that furiously bums due to self ignition (premixed combustion), as a result of which there is no rise in combustion pressure and combustion temperature in excess, so as to restrains generation of NOx. Further, although a period of time between first opening to final closing of the fuel injector during the split fuel injection is relatively prolonged, fuel that is intermittently sprayed is well atomized and vaporized as was previously described so as to cause diffusion combustion. In consequence, no aggravation of combustion condition occurs in the case where the injection timing is retarded. The diesel engine, if anything, rise its mechanical efficiency with an effect of providing further improvement of specific fuel consumption because the pressure in the combustion chamber remains high for a relatively long period of time and, as a result, the expansion force of combustion gas considerably effectively acts on the piston.

The energy of combustion itself rises resulting from the favorable fuel combustion and the exhaust gas is partly discharged while it is at a high temperature resulting from that the fuel combustion becomes slow in ending, as a result of which the temperature and pressure of exhaust gas rise. That is to say, the level of harmful emissions such as NOx and smoke is lowered and specific fuel efficiency is improved, besides, it is possible to control the temperature of an exhaust gas purifying matter such as catalyst in the exhaust line by causing a rise in the temperature and pressure of exhaust gas. In addition, the exhaust condition is controlled by an amount of fuel injection that is determined so as to meet a demand for output torque on the diesel engine, which enables improvement of specific fuel consumption. In this instance, output torque that is demanded on the diesel engine may be detected on the basis of accelerator travel and/or engine speed. In this instance, it is easily achieved to restrict aggravation of specific fuel consumption and generation of smoke by limiting the determined amount of fuel so as to provide an air-fuel ratio in the combustion chamber greater than a stoichiometric air-fuel ratio.

The intervals at which the fuel injector is intermittently actuated to implement each individual split fuel injection may be preferably shorter than approximately one millisecond. If there is interruption of adjacent split fuel injection longer than one millisecond, the fuel sprayed through the succeeding split fuel injection does not lead to immediate diffusion combustion with the result of discontinuous combustion, which is accompanied by the apprehension that it is hardly achievable to lower the level of harmful emissions such as NOx and restrict aggravation of specific fuel consumption and generation of smoke. In order to keep fuel combustion from breaks, the interval is to be shorter than one millisecond. More specifically, in order to prevent fuel drops yielded through preceding split fuel injection from being caught up by fuel drops yielded through succeeding split fuel injection so as thereby to control cohesion of the fuel drops, the interval between the preceding and succeeding split fuel injection is desirably shorter than 900 micro seconds but longer than 100 micro seconds. Moreover, a shorter-than-800 micro seconds of interval that provides an reduced amount of fuel injection through individual split fuel injection may be more desirable for more certain restraint of cohesion of the fuel drops.

The fuel injection control system may implement the second split fuel injection at a point of time after top dead center of a compression stroke. This enables fuel sprayed into the combustion chamber through the second split fuel injection to burn immediately, so as to rise greatly the pressure in the combustion chamber with an effect of increasing viscosity of the compressed air, thereby immediately lowering the velocity of fuel drops yielded through the succeeding split fuel injection. As a result, the fuel drops yielded through the preceding split fuel injection is certainly prevented from being caught up by the fuel drops yielded through the succeeding split fuel injection, so that lowering the level of harmful emissions and improving specific fuel efficiency are more enhanced, besides, both pressure and temperature of exhaust gas rises due to a late end of combustion. Pilot fuel injection, that is typically implemented in order to relieve abrupt early combustion, can not provide the above-mentioned effects of the present invention even when combustion of the pilot fuel occurs at top dead center of a compression stroke. This is because there is no rise in viscosity of compressed air on account of a small amount of fuel nor immediate combustion after the pilot fuel injection. Further, the amount of fuel that complies with a demand for output torque on the diesel engine may be split into more-than-two parts for the split fuel injection. Changing the number of split parts provides for each individual split fuel injection with a sufficiently short period of time for which the fuel injector remains open even when a total amount of fuel injection increases in a single combustion cycle due, for example, to engine operation with a high load. In particular, while the diesel engine operates in a region of ordinary operating conditions, the amount of fuel that meets a demand for output torque on the diesel engine may be split into two parts for the split fuel injection, which causes significant improvement of specific fuel consumption.

The fuel injection control system implements pilot fuel injection immediately before implementation of the fuel injection of the amount of fuel that meets a demand for output torque on the diesel engine. Implementation of the pilot fuel injection eases a rise in combustion pressure during premixed combustion of the fuel sprayed through the primary fuel injection, as a result of which noises and vibrations that the diesel engine generates are lowered.

The fuel injection control system is installed to a direct injection diesel engine equipped with a purifying matter such as a catalyst in an exhaust line which is operative to purify exhaust gas from the diesel engine, the fuel injection control system estimates a heated condition of the purifying matter and implements the split fuel injection while estimating a heated condition in which the purifying matter is before activation. With the fuel injection control system, while a purifying matter such as an oxidization catalyst for oxidizing HC and CO and a NOx absorbing matter is inactive due, for example, to a cold start of the diesel engine, or while the purifying matter is in an inactive condition due to a drop in exhaust gas temperature during engine idling, the fuel injection control system implements primary fuel injection through the split fuel injection, which is accompanied by an effect of causing a rise in the temperature of exhaust gas without causing aggravation of specific fuel efficiency and an increase in harmful emission levels, so as to cause an increase in temperature of the purifying matter. In consequence, the purifying matter that is in an inactive condition is warmed up early enough and remains active, thereby displaying the given exhaust gas purifying performance.

In the case where the purifying matter is operative to adsorb components in exhaust gas from the diesel engine that deteriorate exhaust gas purifying performance of the purifying matter and release the components adsorbed by the purifying matter at temperatures higher than a specified temperature, so as thereby to purify exhaust gas from the diesel engine, the fuel injection control system may estimate an amount of the components adsorbed by the purifying matter and implement the split fuel injection while estimating an amount of deterioration components adsorbed by the purifying matter greater than a specified amount. Since the fuel injection control system implements the split fuel injection when the purifying matter has adsorbed a specified amount of deterioration component such as sulfur oxides in exhaust, there is caused a rise in the temperature of exhaust gas without causing aggravation of specific fuel efficiency and an increase in harmful emission levels, so as to cause an increase in temperature of the purifying matter. In consequence, the purifying matter is warmed up to a specified temperature sufficiently to release the deterioration components, as a result of which the purifying matter is refreshed sufficiently and displays the given exhaust gas purifying performance.

The fuel injection control system may be installed to a diesel engine equipped with a turbosupercharger. When the supercharged diesel engine is in an accelerative operating condition, the fuel injection control system implements primary fuel injection through the split fuel injection. Implementation of the split fuel injection during engine acceleration causes a rise in the temperature and pressure of exhaust gas without causing aggravation of specific fuel efficiency and an increase in harmful emission levels, so as thereby to cause an increase in intake air supercharging efficiency. That is to say, the combustion chamber is rapidly charged with an increased amount of intake air during engine acceleration, as a result of which the diesel engine displays improved acceleration performance. The turbosupercharger may be of a variable geometry type that is able to vary a velocity of an exhaust gas stream introduced into a turbine of the turbosupercharger. Varying the velocity of exhaust gas admitted into the turbine during engine acceleration provides sufficiently high supercharging pressure independently from engine speeds, which provides further improvement of acceleration performance.

According to another embodiment of the present invention, the fuel injection control system implements split fuel injection to spray an amount of fuel complying with or in excess of a torque demand of the diesel engine at a point of time near top dead center of a compression stroke. Specifically, the fuel injection control system estimates a heated condition of the purifying matter and implements the split fuel injection while estimating a heated condition in which the purifying matter is inactive. With the fuel injection control system, implementing the split fuel injection causes the purifying matter that is in an inactive condition is warmed up early enough and remain active without causing aggravation of specific fuel efficiency and an increase in harmful emission levels, so that the purifying matter displays the given exhaust gas purifying performance. Increasing the amount of fuel injection concurrently with implementation of the split fuel injection causes a further rise in the temperature of exhaust gas, so as to cause a rise in the temperature of the purifying matter while controlling aggravation of specific fuel efficiency and an increase in harmful emission levels.

In the case where the purifying matter is operative to adsorb components in exhaust gas from the diesel engine that deteriorate exhaust gas purifying performance of the purifying matter and release the components adsorbed by the purifying matter at temperatures higher than a specified temperature so as thereby to purify exhaust gas from the diesel engine, the fuel injection control system estimates an amount of deterioration components adsorbed by the purifying matter and implements the split fuel injection while estimating an amount of deterioration components adsorbed by the purifying matter greater than a specified amount. Implementation of the split fuel injection causes a rise in the temperature of purifying matter sufficiently to release the deterioration components without causing aggravation of specific fuel efficiency and an increase in harmful emission levels. Further, increasing the amount of fuel injection concurrently with implementation of the split fuel injection causes a further rise in the temperature and pressure of exhaust gas, so as to promote releasing deterioration components from the purifying matter while controlling aggravation of specific fuel efficiency and an increase in harmful emission levels.

The fuel injection control system may implement the second split fuel injection at a point of time after top dead center of a compression stroke. This enables fuel sprayed into the combustion chamber through the second split fuel injection to burn immediately, so as to rise greatly the pressure in the combustion chamber with an effect of increasing viscosity of the compressed air, thereby immediately lowering the velocity of fuel drops yielded through the succeeding split fuel injection. As a result, the fuel drops yielded through the preceding split fuel injection is certainly prevented from being caught up by the fuel drops yielded through the succeeding split fuel injection, so that lowering the level of harmful emissions and improving specific fuel efficiency are more enhanced, besides, both pressure and temperature of exhaust gas rise due to a late end of combustion.

The fuel injection control system may implement at least one of split number corrective control by which a number of split parts of fuel into which the determined amount of fuel is split is varied greater while estimating a heated condition in which the purifying matter is inactive than while estimating a heated condition in which the purifying matter is active ant split interval corrective control by which the intervals of the split fuel injection is prolonged longer while estimating a heated condition in which the purifying matter is inactive than while estimating a heated condition in which the purifying matter is active. With the fuel injection control system, the split number corrective control and/or the split interval corrective control are implemented while the purifying matter is inactive, which causes a rise in the temperature of exhaust gas. As a result, the purifying matter is warmed up early enough and remain active without causing aggravation of specific fuel efficiency and an increase in harmful emission levels, so as to display the given exhaust gas purifying performance.

Further, the fuel injection control system may cause an increase in the amount of fuel in compliance with a torque demand of the diesel engine so as to increase an amount of deoxidizing components in exhaust gas active on the purifying matter while the diesel engine operates in a region of ordinary operating conditions. In the case where a catalyst operative to reduce or deoxidize NOx in exhaust gas is used as the purifying matter, increasing the amount of fuel causes an increase in the deoxidizing component content of exhaust gas and a rise in the temperature of catalyst. The effect resulting from an increase in the deoxidizing component content of exhaust gas and the effects resulting from an early rise in the temperature of purifying matter are concurrently attained, so that the purifying matter displays far more improved exhaust gas purifying performance. In the case where the purifying matter is operative to adsorb components in exhaust gas from the diesel engine that deteriorate exhaust gas purifying performance of the purifying matter and release the components adsorbed by the purifying matter at temperatures higher than a specified temperature so as thereby to purify exhaust gas from the diesel engine, the fuel injection control system estimates an amount of deterioration components adsorbed by the purifying matter and implements the split fuel injection at a point of time near dead top center of a compression stroke, and, while estimating an amount of the components adsorbed by the purifying matter greater than a specified amount, further implements at least one of split number corrective control by which a number of split parts of fuel into which the determined amount of fuel is split is varied greater and split interval corrective control by which the specified intervals are prolonged longer. Increasing the split number or prolonging the split intervals causes a rise in the temperature and pressure of exhaust gas, so as to rise the temperature of purifying matter. In consequence, the purifying matter is warmed up early enough to release deterioration components, so that the purifying matter is refreshed to displays stably the given exhaust gas purifying performance. In this instance, the fuel injection control system may control an average air-fuel ratio in the combustion chamber so as to make the air-fuel ratio equal to or smaller than a stoichiometric air-fuel ratio with an effect of lowering the oxygen content of exhaust gas while estimating an amount of deterioration components adsorbed by the purifying matter greater than the specified amount. Making the average air-fuel ratio smaller than the stoichiometric air-fuel ratio causes an increase in the deoxidizing component content of exhaust gas, so as to promote releasing deterioration components from the purifying matter. Further, the fuel injection control system commences the air-fuel ratio control after commencement of at least one of the split number corrective control and the split interval corrective control. That is, when the purifying matter has adsorbed a greater-than-specified amount of deterioration components, the average air-fuel ratio in the combustion chamber is made smaller than the stoichiometric air-fuel ratio after a rise in the temperature of the purifying matter, as a result of which deterioration components are quite efficiently released from the purifying matter.

Also in this embodiment, the fuel injection control system may be installed to a diesel engine equipped with a turbosupercharger. When the supercharged diesel engine is in an accelerative operating condition, the fuel injection control system implements primary fuel injection through the split fuel injection at a point of time near top dead center of a compression stroke. Implementation of the split fuel injection during engine acceleration causes enhancement of supercharging effect without causing aggravation of specific fuel efficiency and an increase in harmful emission levels, so as thereby to improve acceleration performance of the diesel engine. Further, increasing the amount of fuel injection concurrently with implementation of the split fuel injection causes a further increase in engine output torque as well as a rise in the temperature and pressure of exhaust gas, so as to provide a further improvement of acceleration performance of the diesel engine while controlling aggravation of specific fuel efficiency and an increase in harmful emission levels. In this instance, the injection control system may implement at least one of the split number corrective control and the split interval corrective control while the diesel engine is in an accelerative operating condition. Increasing the split number or prolonging the split intervals during engine acceleration causes a rise in the temperature and pressure of exhaust gas, so as to rise the temperature of purifying matter, as a result of which the diesel engine improves its acceleration performance without causing aggravation of specific fuel efficiency and an increase in harmful emission levels due to enhancement of supercharging effect.

The fuel injection control system may split fuel injection of the amount of fuel in compliance with a torque demand of the diesel engine into two parts while the diesel engine operates in a region of ordinary operating conditions and implements the split fuel injection at a point of time near top dead center of a compression stroke.

In the case where the fuel injection control system is installed to a diesel engine equipped with an exhaust gas recirculation system with an exhaust gas recirculation valve which admits exhaust gas partly into an intake system, the fuel injection control system controls the exhaust gas recirculation valve so that a proportion of recirculated exhaust gas relative to a total amount of intake air introduced into the combustion chamber is basically greater on a side of lower engine load than on a side of higher engine load and is basically smaller in a specific region of lower engine loads than in a region of middle engine loads between a region of lower engine loads and a region of higher engine loads, and implements at least one of the split number corrective control and the split interval corrective control while the diesel engine operates in the specific region of lower engine loads. Controlling the exhaust gas recirculation valve so that a proportion of recirculated exhaust gas relative to a total amount of intake air introduced into the combustion chamber is basically greater on a side of relatively lower engine load than on a side of relatively higher engine load ensures a sufficient amount of exhaust gas that is admitted into the combustion chamber when the diesel engine operates with a relatively lower load with an effect of controlling generation of NOx and, on the other hand, ensures a sufficient amount of air that is introduced into the combustion chamber when the diesel engine operates with a relatively higher load, as a result of which the diesel engine provides output torque in compliance with the high engine load. It is generally thought that, when the diesel engine operates in the specific region of lower engine loads, the diesel engine shifts in operation so frequently to an accelerative operating condition from a low load operating condition. For this reason, while the diesel engine operates in the specific region of lower engine loads, the fuel injection control system controls the exhaust gas recirculation valve so that a proportion of recirculated exhaust gas relative to a total amount of intake air is basically smaller in the specific region of lower engine loads than in the region of middle engine loads, so as thereby to rapidly reduce the proportion of recirculated exhaust gas upon an occurrence of a shift of the diesel engine in operation to acceleration. As a result, the amount of intake air that is introduced into the combustion chamber is increased immediately in response to an increase in the amount of fuel necessary for acceleration with an effect of eliminating an increase of smoke which is caused due to enrichment of a fuel mixture. Further, the fuel injection control system concurrently implements the split number corrective control and/or the split interval corrective control, so as to control generation of NOx. In consequence, there is no increase in NOx emission level in excess even through there is a reduction in the proportion of recirculated exhaust gas.

The above and other objects and features of the present invention will be more clearly understood from the following description when read in conjunction with the accompanying drawings, in which:
Figure 1 is a schematic illustration showing an engine equipped with a fuel injection control system of the present invention;
Figure 2 is a graphic diagram showing the temperature dependency of NOx conversion efficiency of a catalyst which can absorb NOx emissions in exhaust gas with a high oxygen concentration;
Figures 3A and 3B are explanatory view of a turbosupercharger with small A/R and large A/R, respectively;
Figure 4 is a time chart showing fuel injection timing for one-shot primary injection, one-shot primary injection followed by secondary injection, and split primary injection in fuel injection control according to an embodiment of the present invention;
Figures 5A to 5C are a flow chart illustrating a sequence routine of fuel injection control according to the embodiment of the present invention;
Figure 6 is a graphic diagram showing a change in exhaust gas temperature according to split injection modes;
Figure 7 is a graphic diagram showing a change in exhaust gas pressure according to split injection modes;
Figure 8 is a graphic diagram showing a change in engine boost pressure according to split injection modes;
Figure 9 is a graphic diagram showing a change in fuel consumption according to split injection modes;
Figure 10 is a graphic diagram showing a change in smoke generation level according to split injection modes;
Figure 11 is a graphic diagram showing a change in NOx emission level according to split injection modes;
Figure 12 is a graphic diagram showing a change in CO emission level according to split injection modes;
Figure 13 is a graphic diagram showing a change in HC emission level according to split injection modes;
Figure 14 is a time chart showing fuel injection timing for various fuel injection modes in fuel injection control according to another embodiment of the present invention;
Figures 15A to 15C are a flow chart illustrating a sequence routine of fuel injection control according to the other embodiment of the present invention;
Figure 16 is a flow chart illustrating a sequence routine of exhaust gas recirculation control;
Figure 17 is an illustration of a map defining EGR ratio with respect to engine speed and accelerator travel;
Figure 18 is an illustration of defining an amount of target fresh intake with respect to engine speed and accelerator travel;
Figure 19 is a graphic diagram showing an average air-fuel ratio in combustion chamber with respect to an amount of smoke;
Figure 20 is a graphic diagram showing the temperature dependency of NOx conversion efficiency of a catalyst which can absorb NOx emissions in exhaust gas with a high oxygen concentration and used in a fuel injection control system in accordance with still another embodiment of the present invention; and
Figure 21 is a time chart showing fuel injection timing for split fuel injection mode followed by pilot fuel injection in fuel injection control according to the other embodiment of the present invention.

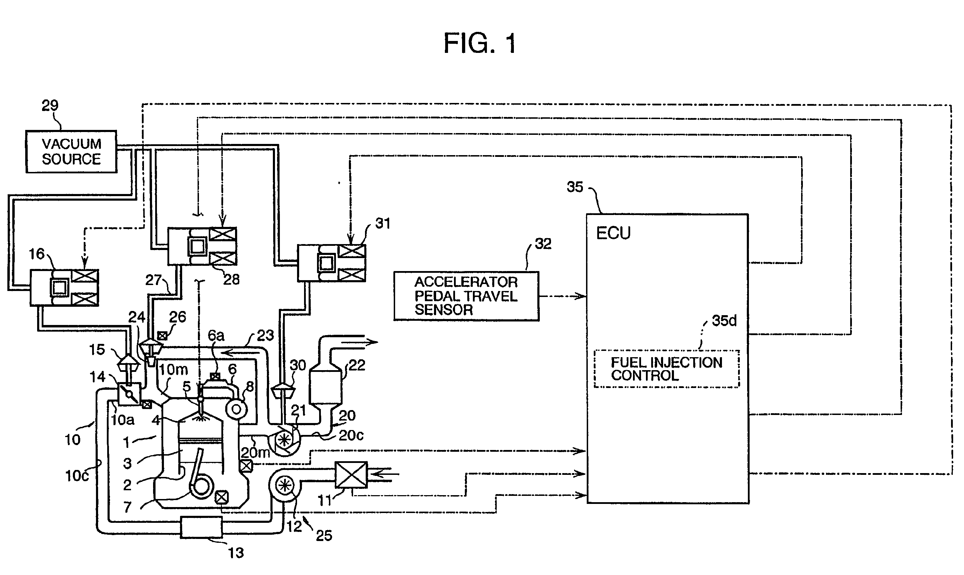

Referring to the drawings in detail and, more particularly, to Figure 1 which shows an overall diesel engine control system including a fuel injection control system according to an embodiment of the invention, a diesel engine 1 of a type having a plurality of cylinders 2 (only one of which is shown) is installed to a vehicle. A combustion chamber 4 is formed in the cylinder 2 by the top of a piston 3. The diesel engine 1 is equipped with a common-rail injection system including a common-rail 6 to which fuel injectors 5 are connected. Each fuel injector 5 is controlled to spray fuel directly into the combustion chamber 4 at a specified timing. The common-rail 6 is provided with a high pressure delivery pump 8 which is driven by a crankshaft 7 and a common-rail pressure sensor 6a operative to monitor fuel pressure (common-rail pressure). The high pressure pump 8 operates so as to maintain the common-rail pressure at a specified pressure level. An angle sensor 9 is provided at an end of the crankshaft 7 to monitor an angle of rotation of the crankshaft 7. Specifically, the angle sensor 9 comprises a disk which is formed with peripheral projections or notches arranged at regular angular intervals and an electromagnetic pick-up positioned so as to be opened by the notches or interrupted by the projections. The angle sensor 9 generates one pulse every time that the electromagnetic pick-up is opened or interrupted, i.e. every regular angular rotation of the crankshaft 7.

Air that is taken into an intake passage 10 is filtered through an air cleaner (not shown) and is introduced into the combustion chamber 4. The intake passage 10 comprises a common pipe 10c having a surge tank (not shown) at its downstream end and an intake manifold 10m through which the combustion chamber 4 are connected to the common intake pipe 10c via the surge tank and is equipped with an air cleaner (not shown), a hot-film type of air flow sensor 11, a blower 12, an inter-cooler 13 and an intake air throttle valve 14 in order from the upstream end of the common pipe 10c. The blower 12 is driven by a turbine 21 which will be described later to assist the vacuum by raising the pressure of incoming air. The surge tank is provided with a pressure sensor 10a which monitors the internal pressure of the surge tank. The intake throttle valve 14 is configured as a butterfly valve which is formed with a notch so as to admit intake air to flow therethrough even while it is fully closed and is controlled in valve lift or position by regulating the vacuum acting on a diaphragm 15 through a vacuum control electromagnetic valve 16. The valve lift or position of the intake throttle valve 14 is monitored by a valve lift or position sensor (not shown). The diesel engine 1 is further provided with a temperature sensor 18 that is installed to a water jacket of the diesel engine 1 so as to monitor the temperature of cooling water as the temperature of the diesel engine 1.

Exhaust gas is discharged through an exhaust passage 20 comprising an exhaust manifold 20m connected to the respective combustion chambers 4 and a common exhaust pipe 20c which is equipped, in order from the upstream side, with a lambda oxygen (λO₂) sensor (not shown), the turbine 21 which is driven by exhaust gas and drives the blower 12 and a catalyst 22 operative to control emission levels of hydrocarbons (HC), carbon monoxide (CO), oxides of nitrogen (NOx) so as thereby purify the exhaust gas. As is well known to those skilled in the art, the λO₂) provides an output that sharply changes before and after a stoichiometric air-fuel ratio.

The catalyst 22 comprises a cordierite honeycomb substrate with a number of bores in parallel with one another in a direction of an exhaust gas flow and a two-layer catalyst, such as comprising an under catalyst layer and an over catalyst layer, applied to walls of each bore. Specifically, The under catalyst layer contains barium Ba operative as a NOx absorbing matter and a noble metal such as Pt and a porous material such as ceria and alumina on which Ba and Pt are supported. The over catalyst layer contains Pt, Rh and Ba and a porous material such as zeolite on which Pt, Rh and Ba are supported. This catalyst 22 is of an absorption/reduction type that, on one hand, absorbs NOx while the oxygen concentration of exhaust gas is high, in other words, while combustion of a fuel mixture with the average air-fuel ratio lower than the stoichiometric air-fuel ratio is made and, on the other hand, releases NOx when the oxygen concentration of exhaust gas becomes lower as a result of combustion of a stoichiometric or richer fuel mixture. The NOx absorption/desorption action depends upon temperatures of the catalyst 22. For example, as shown in Figure 2, while the catalyst 22 shows significantly high NOx conversion efficiency in a temperature region between approximately 250 and 400°C, it sharply lowers the NOx conversion efficiency as decreasing its temperature in a temperature region below approximately 250°C, i.e. remains inactive, and as increasing its temperature in temperature region above approximately 400°C. Barium particles in the catalyst 22 has the property of readily absorbing SOx (sulfur oxides as deterioration components in exhaust gas rather than NOx. In consequence, when sulfur in fuel or engine oil is burnt and discharged, SOx in the exhaust gas is absorbed on surfaces of the Ba particle. When the amount of absorbed Ba particles increases, what is called sulfur-poisoning (S-poisoning) that is referred to the behavior of lowering the NOx absorption efficiency with an increase in the amount of absorbed SOx. In order for the catalyst 22 to release the SOx it is necessary to rise the temperature of the catalyst 22 above a specified temperature, for example 400°C. The impurities content of the catalyst 22 is preferred less than 1%. The catalyst may contain at least one selected from a group of alkaline earth metals other than Ba, alkaline metals such as sodium (Na) and rare earth metals. In the case where the under catalyst layer contains zeolite which may be used as the support material, the over catalyst layer may contain alumina or ceria as the support material. The catalyst 22 may be of a single layer type that comprises a coating of a support material such as ceria and alumina that is applied to wall surfaces of the cordierite honeycomb substrate, and noble metals such as Pt, Rh and Pd and one selected from a group of alkaline metals such as potassium (K) and alkaline earth metals such as Ba supported on the support material.

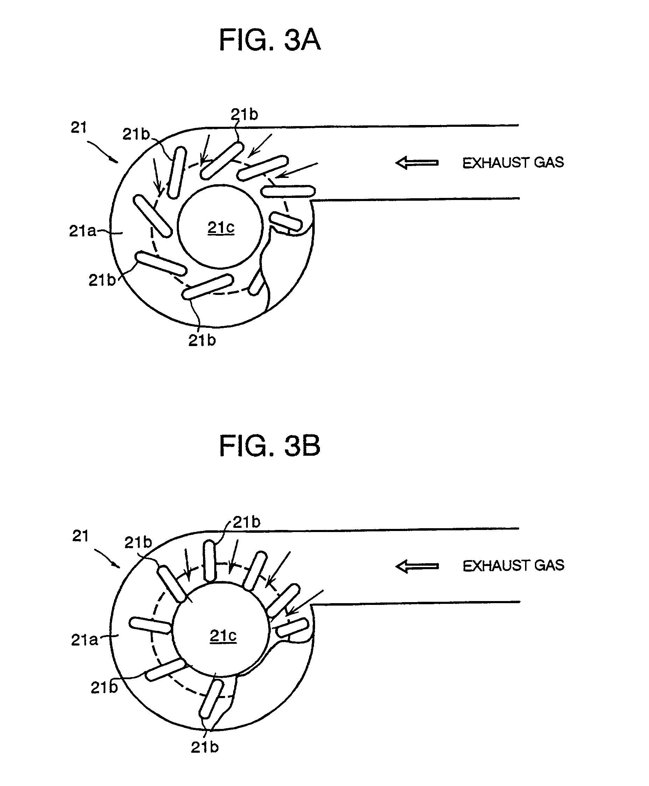

Referring to Figures 3A and 3B showing a variable geometry type of turbosupercharger (VGT) 25, which comprises the turbine 21 and the blower 12. As shown, the turbosupercharger 25 includes a number of movable turbine blades 21b arranged at regular angular intervals in a turbine casing 21a so as to enclose the turbine 21. These turbine blades 21b move to change their angles (which is referred to as turbine blade angles) with respect to a direction of rotation of the turbine 21. A turbine nozzle cross section (A) which governs what is called an A/R ratio depends upon the turbine blade angle. That is, the turbine blade angle is a measurement of how high the A/R ratio of the turbine has - the greater the turbine blade angle, the higher the A/R ratio. While the turbine blade angle is kept small as shown in Figure 2A to provide a low A/R ratio, the supercharging efficiency is increased in a range of lower engine speeds where the amount of exhaust gas flow is small. Contrary to this, while the turbine blade angle is kept large as shown in Figure 2B to provide a high A/R ratio, the supercharging efficiency is increased even in the range of higher engine speeds where the amount of exhaust gas flow is great.

Referring back to Figure 1, an exhaust gas recirculation (EGR) passage 23 through which exhaust gas is partly recirculated into an intake air stream is connected between the common exhaust pipe 20c upstream from the turbine 21 and the intake manifold 10m downstream far from the inter-cooler 13. The exhaust gas recirculation passage 23 is provided with a vacuum operated, diaphragm type of exhaust gas recirculation or exhaust gas recirculation (EGR) valve 24 to admit partly exhaust gas into the intake air stream. The valve lift or opening of exhaust gas recirculation valve 24 is variable so as to vary an exhaust gas recirculation rate. The exhaust gas recirculation valve 24 comprises a spring-loaded valve box (not shown) and a diaphragm 24a by which the valve box is forced against a spring to open so as to linearly change an aperture size of the exhaust gas recirculation passage 23. Specifically, the diaphragm 24a is connected to a vacuum pump 29 as a vacuum source through a vacuum passage 27 with a vacuum control electromagnetic valve 28. An engine control unit (ECU) 35, which will be described later, provides a control signal with which the vacuum control electromagnetic valve 28 is operated to open or shut the vacuum passage 27. Opening and shutting the vacuum passage 27 regulates the vacuum as exhaust gas recirculation valve driving force, so as thereby to linearly change the aperture size of the exhaust gas recirculation passage 23. The exhaust gas recirculation valve 24 is accompanied by a valve lift or position sensor 26 which monitors valve lift or position of the exhaust gas recirculation valve 24. In this instance, the turbine 21 is accompanied by a diaphragm 30. A vacuum control electromagnetic valve 31 controls vacuum that acts on the diaphragm 30 to regulate turbine blade angles of the turbine blades 21b.

The engine control unit (ECU) 35 receives signals from various sensors including at least the common-rail pressure sensor 6a, the crankshaft angle sensor 9, the pressure sensor 10a, the air flow sensor 11, the engine temperature sensor 18, the valve lift sensor 26 and an accelerator travel sensor 32 which detects a travel of an accelerator pedal (not shown) and provides control signals with which the fuel injector 5, the high pressure pimp 8, the intake throttle valve 14, the exhaust gas recirculation valve 24, the turbine blades 21b and the like are operated and controlled, respectively. The amount and timing of fuel injection through the fuel injector 5 is controlled according to engine operating conditions. Fuel injection pressure is controlled through control of common-rail pressure by the high pressure pimp 8. In addition, control of the amount of intake air by the intake throttle valve 14, control of the amount of recirculated exhaust gas by the exhaust gas recirculation valve 24, and control of the angle of the turbine blade 21b are performed.

Specifically, the engine control unit (ECU) 35 has functional means 35d for fuel injection control. The fuel injection control means 35d has a memory that stores a fuel injection control map of amounts of fuel injection *Q* optimized on an experimental basis according to target engine output torque and engine speeds. In ordinary engine operating conditions, the fuel injection control means 35d reads in a basic amount of fuel injection *Qbase* from the fuel injection control map on the basis of target engine output torque obtained on the basis of an accelerator travel that is detected by the accelerator travel sensor 32 and an engine speed obtained on the basis of an angle of rotation of the crankshaft that is detected by the crankshaft angle sensor 9, and determines an fuel injector energization period for which the fuel injector 5 remains open on the basis of the basic amount of fuel injection *Qbase* and common-rail pressure detected by the common-rail pressure sensor 6a. In this instance, the basic amount of fuel injection *Qbase* may be corrected according to an engine temperature and atmospheric pressure. The fuel injector 5 is basically controlled to spray the amount of fuel that meets the target engine output torque (torque demanded on the diesel engine 1) with the result of causing the diesel engine to operate with a significantly lean fuel mixture at an average air-fuel ratio greater than 18. That is, since the fuel injection control accurately determines the target engine output torque on the basis of an accelerator travel and an engine speed and prevents the fuel injector 5 from spraying fuel in excess of the amount of fuel injection complying with the target engine output torque, so as to improve specific fuel consumption of the diesel engine 1 covering the mileage of the vehicle.

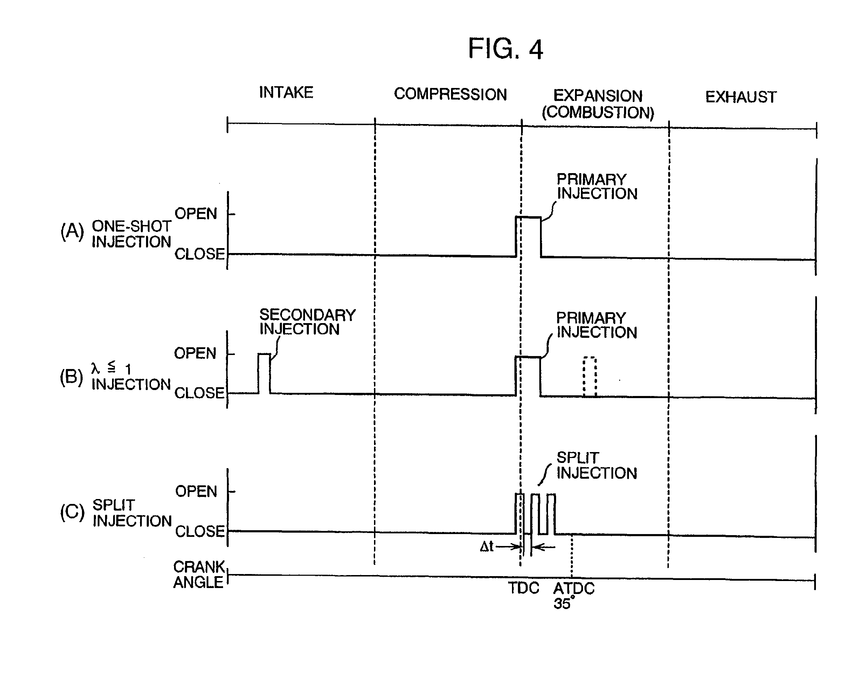

In the fuel injection control, amounts of absorbed NOx and adsorbed SOx by the catalyst 22 are estimated and, when a decline in the NOx absorption efficiency is predicted due to increases in the amounts of absorbed NOx and adsorbed SOX greater than specific levels, the catalyst 22 is caused to release NOx and SOx so as to be refreshed. That is to say, as will be described in detail later, the catalyst 22 is caused to release the absorbed NOx (which is hereafter referred to as NOx release control) and cause the adsorbed SOx to be. desorbed (which is hereafter referred to as SOx desorption control) by, in addition to mainly controlling the average air-fuel ratio in the combustion chamber 4 so as to be approximately equal to or smaller than the stoichiometric air-fuel ratio which is implemented by increasing the amount of fuel injection, spraying the main part of fuel through primary fuel injection at a point of time near but before top dead center of a compression stroke and the increased part of fuel *Qc* through secondary fuel injection at a point of time between the beginning of an intake stroke and an early half of an expansion stroke as shown in Figure 4. In this instance, as shown by a broken line in Figure 4, the secondary fuel injection may be performed in an expansion stroke or in an exhaust stroke. As shown in Figure 4, when it is required to put the catalyst 22 in a risen temperature condition or while the diesel engine 1 is in an accelerative operating condition, the primary fuel injection at a point of time near but before top dead center of a compression stroke may be split into three parts separated at regular intervals so as to rise the pressure and temperature of exhaust gas.

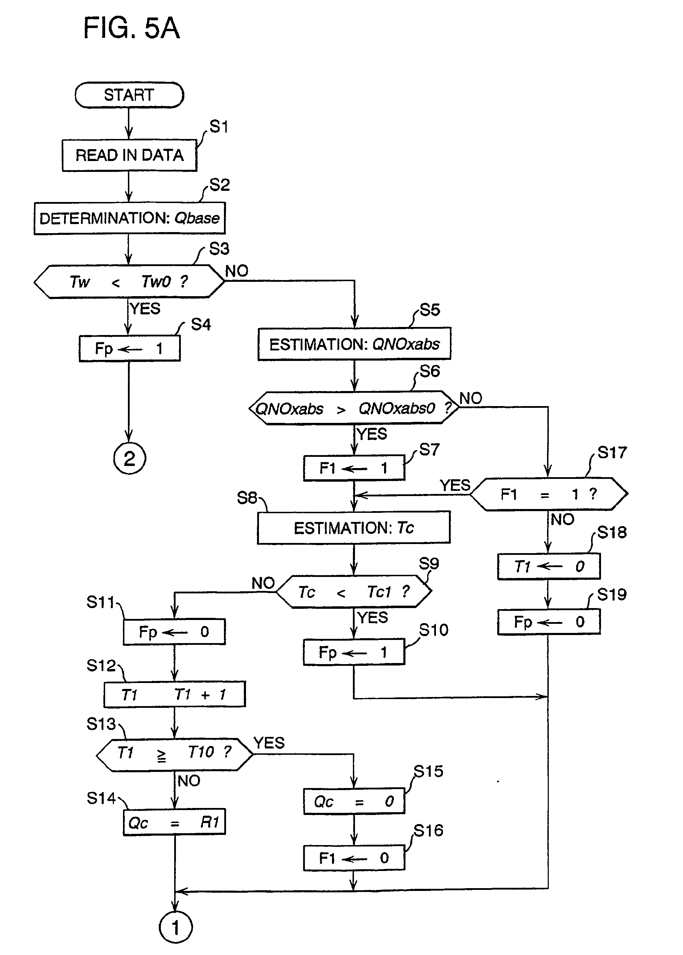

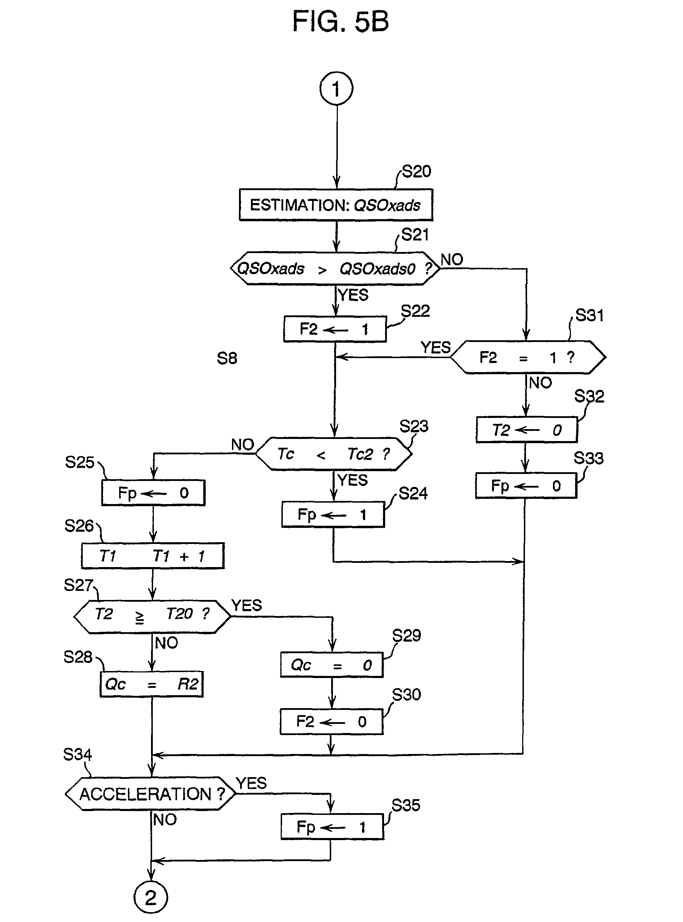

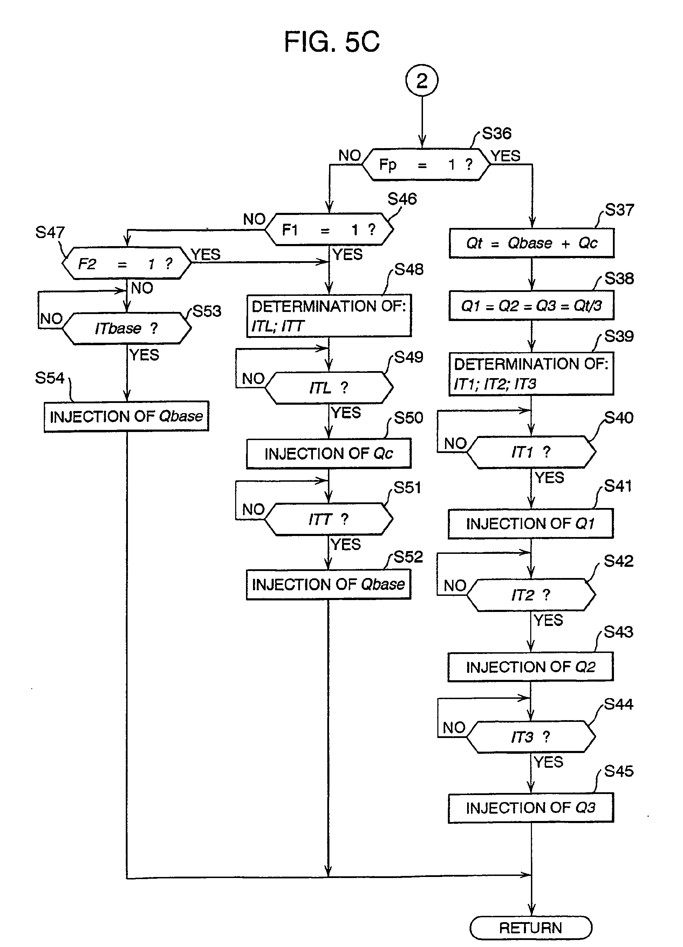

Figures 5A through 5C are a flow chart illustrating, as a first embodiment, a sequence routine of fuel injection control which is performed with every specific angle of rotation of the crankshaft by cylinder. When sequence logic starts and control proceeds to a block at step S1 where data including an crankshaft angle, an air flow rate, an accelerator travel and an engine temperature are read in. Subsequently, at step S2, a basic amount of fuel injection *Qbase* is read and determined from the fuel injection control map according to a target engine output torque and an engine speed *Ne* obtained on the basis of the accelerator travel and the crankshaft angle, respectively, and an injection timing *ITbase* for the basic amount of fuel injection *Qbase* is read from the fuel injection control means 35d. Basic ignition timings *ITbase* are optimized on an experimental basis according to engine temperatures *Tw* and engine speeds *Ne* and stored in the form of a map in the memory of the fuel injection control means 35d. In this embodiment, the basic ignition timing *ITbase* is advanced with a drop in engine temperature *Tw* and a rise in engine speed *Ne* so as to cope with differences in ignition delay due, for example, to differences in engine temperature *Tw* and/or engine speed *Ne.* Following the determination of basic amount of fuel injection *Qbase* and basic ignition timing *ITbase,* a decision is made at step S3 as to whether the engine temperature *Tw* is lower than a predetermined temperature *Tw0* which is the threshold of activation of the catalyst 22. If the answer to the decision is affirmative, this indicates that the engine temperature *Tw* is still lower than the threshold temperature *Tw0,* i.e. it is presumed that the catalyst is not yet sufficiently active, then, after setting up a split injection control flag Fp (Fp = 1) at step S4, the control proceeds to a block at step S36 in fuel injection control for estimation of the amount of adsorbed SOx. The split fuel injection control flag Fp indicates implementation of the split fuel injection control for the primary fuel injection in order to promote warming up of the catalyst 22 while being set up (Fp = 1) and interruption of the split injection control of primary fuel injection while being down (Fp = 0). Specifically, while the catalyst is not yet warmed up and still inactive upon a cold start of the diesel engine 1, the split injection control of primary fuel injection is implemented to rise the temperature of exhaust gas with an effect of warming up the catalyst 22. On the other hand, when the answer to the decision is negative, this indicates that the engine temperature *Tw* is higher than the threshold temperature *Tw0*, i.e. it is presumed that the catalyst has been warmed up and active, then, the control proceeds to a block at step S5 for estimation of the amount of absorbed NOx. The amount of absorbed NOx may be estimated on the basis of an arithmetic product of a mileage and a total amount of fuel consumption covering the mileage of the vehicle or on the basis of an arithmetic product of a duration of engine operation and a total amount of fuel consumption covering the mileage of the vehicle after a correction according to an engine operating condition. The amount of absorbed NOx may be further estimated to have become large every predetermined duration of engine operation.

Subsequently to the estimation of the amount of absorbed NOx *QNOxabs* at step S5, a decision is made at step S6 as to whether the estimated amount of absorbed NOx *QNOxabs* is greater than a predetermined amount of absorbed NOx *QNOxabs0.* When the answer to the decision is negative, the control proceeds to a decision at step S17. On the other hand, when the answer to the decision is affirmative, a NOx release control flag F1 is set up (F1 = 1) at step S7. The NOx release control flag F1 indicates that it is within a period of implementation of the NOx release control while being set up (F1 = 1) and within a period of interruption of the NOx release control while being down (F1 = 0). After setting up the NOx release control flag F1 at step S7, estimation of catalyst temperature *Tc* of the catalyst 22 is made at step S8. The catalyst temperature *Tc* may be estimated on the basis of a transition of engine temperature *Tw0* for specific period to the present time and engine speeds or vehicle speeds in the specific period. Otherwise, a temperature sensor may be incorporated in the exhaust passage 20 in close proximity to the catalyst 22 so as to directly detect the temperature of the catalyst 22. A decision is subsequently made at step S9 as to whether the estimated catalyst temperature *Tc* is lower than a first critical temperature *Tc1* of, for example, 250°C which is the threshold of a decline in NOx conversion performance of the catalyst 22. When the answer to the decision is affirmative, this indicates that the catalyst 22 is not yet warmed up, and hence is on the decline in NOx absorption/release activity, then, after setting up the split fuel injection control flag Fp (Fp = 1) at step S10, the control proceeds to the block at step S20 in NOx release control for estimation of the amount of adsorbed SOx *QSOxads.* That is, although it is predicted that the catalyst 22 declines in NOx conversion efficiency due to an increase in the amount of absorbed NOx, refreshing the catalyst 22 by releasing NOx is hardly accelerative if the catalyst 22 has not yet been warmed up. In this event, the split injection control of primary fuel injection is performed in the first place with the intention of raising the catalyst temperature. On the other hand, when the answer to the decision is negative, this indicates that the catalyst 22 has been warmed up, then, after resetting down the split fuel injection control flag Fp (Fp = 0) at step S11 and changing a first timer count *T1* by an increment of one at step S12, a decision is made at step S13 as to whether the first timer count *T1* is greater than a first threshold value *T1*_{*0*} for the period of implementation of the NOx release control. When the answer to the decision is negative, then, at step S14, an additional amount of fuel injection *Qc* is determined as a value *R1* that is to be sprayed additionally to the basic amount of fuel injection *Qbase* so as to bring the average air-fuel ratio in the combustion chamber 4 near the stoichiometric air-fuel ratio. The additional amount of fuel injection *Qc* (= *R1*) is determined by computing an amount of fuel injection on the basis of an intake air flow rate that is monitored by the air flow sensor 11 so as to provide an approximately stoichiometric fuel mixture for the amount of intake air. On the other hand, when the answer to the decision concerning first timer count *T1* relative to the first threshold value *T1*_{*0*} made at step S13 is affirmative, this indicates that the period of implementation of the NOx release control has been over, then, after determining the additional amount of fuel injection *Qc* as a value of zero (0) at step S15 and resetting down the NOx release control flag F1 down (F1 = 0) at step S16, the control proceeds the block at step S20 in the NOx release control. That is, when it is predicted that the catalyst 22 declines in NOx conversion efficiency due to an increase in the amount of absorbed NOx and the catalyst 22 is in a warmed up condition, refreshing the catalyst 22 is attempted by releasing NOx from the catalyst in the NOx release control.

In the event where the answer to the decision concerning the estimated amount of absorbed NOx *QNOxabs* relative to the predetermined amount of absorbed NOx *QNOxabs0* made at step S6 is negative, another decision is made at step S17 as to whether the NOx release control flag F1 is up (F1 = 1). When the answer to the decision is affirmative, this indicates that it is on the way of the NOx release control, then, the control proceeds to the block at step S20 in the NOx release control for estimation of the amount of adsorbed SOx *QSOxads* after taking steps S8 - S16. However, when the answer to the decision is negative, this indicates that it is the period of interruption of the NOx release control, then, the control proceeds to the block at step S20 in the NOx release control for estimation of the amount of adsorbed SOx *QSOxads* after resetting the first timer count *T1* to zero at step S18 and subsequently resetting down the split fuel injection control flag Fp (Fp = 0) at step S19.

At step S20, an amount of adsorbed SOx *QSOxads* is estimated to determine a degree of S-poisoning of the catalyst 22. The estimation of the amount of adsorbed SOx *QSOxads* is made in the same manner as for the estimation of the amount of absorbed NOx *QNOxabs.* Subsequently to the estimation of the amount of adsorbed SOx *QSOxads* at step S20, a decision is made at step S21 as to whether the estimated amount of adsorbed SOx *QSOxads* is in excess of a predetermined amount of adsorbed NOx *QSOxads0.* In this instance, since the sulfur content of exhaust gas is small, the mileage until the amount of adsorbed SOx *QSOxads* becomes excessive is generally considerably greater than the mileage until the amount of absorbed NOx *QNOxabs* becomes excessive. When the answer to the decision is negative, the control proceeds to a decision at step S31. On the other hand, when the answer to the decision is affirmative, the control proceeds to steps S22 through S30 for SOx desorption. That is, when the estimated amount of adsorbed SOx *QSOxads* is in excess of the predetermined amount of adsorbed NOx *QSOxads0,* a SOx desorption control flag F2 is set up (F2 = 1) at step S22. The SOx desorption control flag F2 indicates that it is within a period of implementation of the SOx desorption control while being up (F2 = 1) and within a period of interruption of the SOx desorption control while being down (F2 = 0). After setting up the SOx desorption control flag F2 at step S22, a decision is subsequently made at step S23 as to whether the estimated catalyst temperature *Tc* is lower than a second critical temperature *Tc2* of, for example, 450°C which is the threshold of promotion of SOx desorption. When the answer to the decision is affirmative, this indicates that the catalyst 22 is warmed up insufficiently to promote SOx desorption, then, the split fuel injection control flag Fp is set up (Fp = 1) at step S24. On the other hand, when the answer to the decision is negative, this indicates that the catalyst 22 has been warmed up sufficiently to promote SOx desorption, then, after setting down the split fuel injection control flag Fp (Fp = 0) at step S25 and changing a second timer count *T2* by an increment of one at step S26, a decision is made at step S27 as to whether the second timer count *T2* is greater than a second threshold value *T2*_{*0*} for the period of implementation of the SOx desorption control. While the answer to the decision remains negative, i.e. until the second threshold value *T2*_{*0*} is over, an additional amount of fuel injection *Qc* is determined as a value *R2* (which is equal to or greater than the value *R1*) that is to be sprayed additionally to the basic amount of fuel injection *Qbase* so as to bring the average air-fuel ratio in the combustion chamber 4 below the stoichiometric air-fuel ratio. On the other hand, when the answer to the decision concerning second timer count *T2* relative to the second threshold value *T2*_{*0*} made at step S27 is affirmative, this indicates that the period of implementation of the SOx desorption control has been over, then, the additional amount of fuel injection *Qc* is determined as a value of zero (0) at step S29 and, subsequently, the SOx desorption control flag F2 is set down (F2 = 0) at step S30. Because, if the catalyst temperature is not somewhat high even though it is predicted that the catalyst 22 has been deteriorated due to an excess of SOx adsorption, it is impossible to desorb SOx, the catalyst temperature is elevated by executing the split injection control of primary fuel injection. On the other hand, if the catalyst 22 is at a sufficiently high temperature, the SOx desorption control is implemented to desorb SOx from the catalyst 22.

In the event where the answer to the decision concerning the estimated amount of adsorbed SOx *QSOxads* relative to the predetermined amount of adsorbed SOx *QSOxads0* made at step S21 is negative, another decision is made at step S31 as to whether the SOx desorption control flag F2 is up (F2 = 1). When the answer to the decision is affirmative, this indicates that it is on the way of the SOx desorption control, then, the control proceeds to steps S23 through S30. However, when the answer to the decision is negative, this indicates that it is the period of interruption of the SOx desorption control, then, the second timer count *T2* is reset to zero at step S32 and the split fuel injection control flag Fp is reset down (Fp = 0) at step S33.

Subsequently to step S24, S28, S30 or S33, a decision is made at step S34 as to whether the diesel engine 1 is in an accelerative operating condition. This decision is made on the basis of, for example, changes in accelerator travel and engine speed. Subsequently, the control proceeds to another decision at step S36 directly when the diesel engine 1 is not in an accelerative operating condition or after setting up the split fuel injection control flag Fp (Fp = 1) at step S35 when the diesel engine 1 is in an accelerative operating condition. That is, while the diesel engine 1 is in an accelerative operating condition, the split injection control of primary fuel injection is implemented in spite of conditions of the catalyst 22 so as to increase the supercharging efficiency of the turbosupercharger 25 by raising the pressure of exhaust gas.

At step S36, a decision is made whether the split fuel injection control flag Fp is up (Fp = 1). When the answer to the decision is affirmative, a total amount of fuel injection *Qt* is determined by adding the additional amount of fuel injection *Qc* to the basic amount of fuel injection *Qbase* at step S37. In this instance, when either one of the NOx release control flag F1 and the SOx desorption control flag F2 is not up, i.e. when the catalyst 22 is not in excess of NOx or SOx, the total amount of fuel injection *Qt* is equal to the basic amount of fuel injection *Qbase* since no additional amount of fuel injection *Qc* is provided. Subsequently, after dividing the total amount of fuel injection *Qt* into three equal parts as first, second and third amounts of split fuel injection *Q1, Q2* and *Q3,* at step S38, split fuel injection timings *IT1, IT2* and *IT3* are determined so as to cause the first, second and third split fuel injection of the first, second and third amounts of fuel injection *Q1, Q2* and *Q3,* respectively, at regular injection intervals Δ*t* (which is, for example in this embodiment, approximately 900 micro seconds) at step S39. The injection interval *Δt* between each adjacent split fuel injection may be between approximately one millisecond and approximately 100 micro seconds on condition that the first split fuel injection timing *IT1* is the same as the basic fuel injection timing *ITbase* for the one shot primary fuel injection and the third split fuel injection ends before 35° after top dead center (ATDC) of a compression stroke. The time for which the fuel injector 5 remains open is determined according to the total amount of fuel injection *Qt* and fuel pressure and may preferably be shorter than approximately 800 micro seconds. In this point of view, the total amount of fuel injection *Qt* may be sprayed through four to seven split fuel injection for the primary fuel injection.

Subsequently, a decision is made at step S40 whether the first fuel injection timing *IT1* has been reached. This decision is made on the basis of a signal of crank angle and repeated until the first fuel injection timing *IT1* is reached. At the moment the first fuel injection timing *IT1* is reached, the first split fuel injection is implemented to spray the first amount of fuel injection *Q1* into the combustion chamber 4 at step S41. A decision is made at step S42 whether the second fuel injection timing *IT2* has been reached. This decision is repeated until the second fuel injection timing *IT2* is reached. At the moment the second fuel injection timing *IT2* is reached, the second split fuel injection is implemented to spray the second amount of fuel injection *Q2* into the combustion chamber 4 at step S43. Further, a decision is made at step S44 whether the third fuel injection timing *IT3* has been reached. This decision is repeated until the third fuel injection timing *IT3* is reached. At the moment the third fuel injection timing *IT3* is reached, the third split fuel injection is implemented to spray the third amount of fuel injection *Q3* into the combustion chamber 4 at step S45. After the implementation of the third fuel injection timing *IT3.*

As apparent from the above description, the split fuel injection for the primary fuel injection is implemented while the split fuel injection control flag Fp is up (Fp = 1), i.e. in one of the cases, namely (1) the case where the catalyst 22 is insufficiently warmed up after a cold start of the diesel engine 1, (2) the case where, although the NOx release control is desired during engine operation, the catalyst 22 is insufficiently warmed up due to a drop in temperature after having been warmed up once, (3) the case where, although the SOx desorption control is desired, the catalyst 22 is insufficiently high in temperature, and (4) the case where the diesel engine 1 is in an accelerative operating condition.

On the other hand, when the answer to the decision is negative, this indicates that it is not in the period of implementation of the split fuel injection control for the primary fuel injection, then, a decision is made at step S46 as to whether the NOx release control flag F1 is up (F1 = 1). When the answer to the decision is negative, then, another decision is successively made at step S47 as to whether the SOx desorption control flag F2 is up (F2 = 1). When the answer to the decision concerning the NOx release control flag F1 made at step S46 is affirmative or when the answer to the decision concerning the SOx desorption control flag F2 made at step S47 is affirmative even while the NOx release control flag F1 is negative, in other words, when it is in the period of implementation of the NOx release control or the SOx desorption control, injection timings *ITT* and *ITL* for the primary fuel injection and the secondary fuel injection, respectively, are determined at step S48. As shown in Figure 4, the secondary fuel injection is either one of early fuel injection which is caused between the beginning of an intake stroke and an early half of a compression stroke and later fuel injection which is caused in an expansion stroke or in an exhaust stroke after completion of the primary fuel injection. In this embodiment, the secondary fuel injection timing *ITL* is set to a point of time in an early half of an intake stroke and the primary fuel injection timing *ITT* is set to a point of time near the end of a compression stroke.

Subsequently, a decision is made at step S49 whether the secondary fuel injection timing *ITL* has been reached. This decision is made on the basis of a signal of crank angle and repeated until the secondary fuel injection timing *ITL* is reached. At the moment the secondary fuel injection timing *ITL* is reached, the secondary fuel injection is implemented to spray the additional amount of fuel injection *Qc* into the combustion chamber 4 at step S50. Thereafter, a decision is made at step S51 whether the primary fuel injection timing *ITT* has been reached. This decision is repeated until the primary fuel injection timing *ITT* is reached. At the moment the primary fuel injection timing *ITT* is reached, the primary fuel injection is implemented to spray the basic amount of fuel injection *Qbase* into the combustion chamber 4 at step S52.

As apparent from the above description, when either one of the NOx release control flag F1 and the SOx desorption control flag F2 is up, i.e. in any one of the cases, namely (1) the case where the catalyst 22 has absorbed NOx in excess and sufficiently warmed up while the diesel engine 1 is not in an accelerative operating condition and (2) the case where it is predicted that the catalyst 22 encounters aggravation of catalyzing performance due to S-poisoning and is at a sufficiently high temperature, the amount of fuel injection is increased by an additional amount of fuel injection *Qc* so as to provide an average air-fuel ratio in the combustion chamber 4 near or lower than the stoichiometric air-fuel ratio and the additional amount of fuel injection *Qc* is sprayed in the combustion chamber 4 in an early half of an intake stroke. In place of spraying the additional amount of fuel injection *Qc* at an early stage, it may be otherwise done to determine a total amount of fuel injection *Qt* by adding the additional amount of fuel injection *Qc* to the basic amount of fuel injection *Qbase* and divide the total amount of fuel injection *Qt* into two parts, namely an amount of early fuel injection *QrL* and an amount of later fuel injection *QrT,* that are sprayed separately. In this case, a proportion of the amount of early fuel injection *QrL* may be determined according to engine loads and speeds and is preferred to be between approximately 8 to 23% of the amount of later fuel injection *QrT.*

When neither the NOx release control flag F1 nor the SOx desorption control flag F2 is up, a decision is made at step S53 as to whether the basic fuel injection timing *ITbase* has been reached. This decision is made on the basis of a signal of crank angle and repeated until the basic fuel injection timing *ITbase* is reached. At the moment the basic fuel injection timing *ITbase* is reached, the primary fuel injection is implemented to spray the basic amount of fuel injection *Qbase* into the combustion chamber 4 at step S54.

After implementation of the split fuel injection at step S45, the primary fuel injection at step S52 subsequent to implementation of the secondary fuel injection or implementation of the one-shot primary fuel injection at step S54, the sequence logic orders return for another fuel injection control sequence routine.

In the above described embodiment, when the fuel injection control means 35d implements the split fuel injection control for the primary fuel injection, the fuel injector 5 is controlled to open at injection intervals of approximately less-than-900 micro seconds and to remain open for approximately less-than-800 micro seconds. Further, the timing at which the fuel injector 5 closes is set to a point of time before 35° after top dead center of a compression stroke.

With the fuel injection control system according to the first embodiment described above, upon a cold start of the diesel engine 1, the split fuel injection control takes place for the primary fuel injection in order to promote a rise in temperature of the catalyst that is not yet warmed up. That is, the amount of fuel is divided into three parts and sprayed through the split fuel injection at a point of time near but before top dead center. While fuel from the fuel injector 5 forms a cone-shaped fuel splay as a whole and spreads in the combustion chamber 4, the fuel spray is repeatedly broken up into minute fuel drops due to friction with air and evaporates from surfaces of the fuel drops, so as to turn fuel vapor. At this time, a proportion of premixed combustion of the fuel sprayed through the first one of the three split fuel injection is relatively small there is no rise in combustion pressure and combustion temperature in excess, so that generation of NOx is reduced. Further, the injection interval from closing to opening of the fuel injection for which the fuel injector 5 interrupts fuel injection is set to approximately longer-than-100 micro seconds, so that there occurs almost no affair that fuel drops yielded through second fuel injection catch up with fuel drops yielded through first fuel injection and the fuel drops yielded through the second fuel injection are caught up by fuel drops yielded through third fuel injection. In particular, in the above embodiment, since the second fuel injection is caused after top dead center of a compression stroke, so that combustion of the fuel sprayed through the second fuel injection is immediate and, in consequence, pressure in the combustion chamber 4 greatly rises with an effect of increasing the viscosity of compressed air, thereby decelerating fuel drops yielded through the third fuel injection immediately with an adverse effect of catching up with fuel drops yielded through the previous fuel injection. In addition, a time for which the fuel injector 5 remains open is set to approximately 800 micro seconds and, as a result, the amount of fuel injection is sufficiently small, so that reunion of fuel drops with one another in the fuel spray is restrained to a minimum. Therefore, since fuel drops that have been made finely minute once are prevented from cohesion, atomization and vaporization of fuel is sufficiently promoted by, for example, increasing the pressure of fuel with an effect of increasing the speed of fuel injection, so that the mixed condition of fuel vapor and air is drastically improved. Moreover, since an injection interval for which the fuel injector 5 interrupts fuel injection between adjacent split fuel injection is less-than-one milliseconds, fuel sprayed through the second fuel injection starts to burn before a termination of burn of fuel sprayed through the first fuel injection, and similarly fuel sprayed through the third fuel injection starts to burn before a termination of burn of fuel sprayed through the second fuel injection. Accordingly, fuel is sprayed through the split fuel injection without a break and satisfactorily and continuously burns. Further, since the timing at which the fuel injector 5 closes is set to a point of time before 35° after top dead center of a compression stroke, combustion does not becomes slow in excess. In short, by performing the primary fuel injection through the split fuel injection, the condition of combustion of the fuel sprayed through the split fuel injection is considerably improved with the result of realizing restraint of generation of smoke and improvement of specific fuel consumption. Since, although termination of fuel injection is relatively delayed, the fuel intermittently sprayed is satisfactorily atomized and vaporized as mentioned above, there is no aggravation of combustion condition like the case where a fuel injection timing is retarded, or rather, the pressure in the combustion chamber 4 is kept high for a relatively long time and, as a result, expansion force of combustion gas is considerably effectively transmitted to the piston 3, so that specific fuel consumption is improved by virtue of improved mechanical efficiency. The fuel injection becomes late in terminating as well as combustion energy becomes great by virtue of satisfactorily combustion of fuel, so that exhaust gas partly flows out into the exhaust passage 20 while it is still at a high temperature, as a result of which the catalyst temperature can be rapidly elevated by elevating the temperature and pressure of exhaust gas. In this way, when the catalyst 22 is sufficiently warmed up, the basic amount of fuel injection *Qbase* is sprayed through the one-shot fuel injection at a timing near top dead center of a compression stroke as shown in Figure 4, so that the diesel engine 1 is operated with a lean air-fuel mixture which has an average air-fuel ratio in the combustion chamber 4 higher than the stoichiometric air-fuel ratio. When the catalyst 22 absorbs NOx generated accompanying the combustion of fuel in excess of the threshold valve, the temperature of catalyst 22 is estimated first. At this time, when the catalyst 22 is in an insufficiently warmed condition after idling of the diesel engine 1 of long duration, the split fuel injection control for the primary fuel injection is implemented to rise catalyst temperature. On the other hand, when the catalyst 22 is in an sufficiently warmed condition, the NOx release control is implemented to increase the amount of fuel injection so as to bring an air-fuel ratio in the combustion chamber 4 near to the stoichiometric air-fuel ratio and the additional amount of fuel injection is made in an early half of an intake stroke. Through implementation of the NOx release control, while generation of smoke is restrained, the oxygen content of exhaust gas is lowered, as a result of which the catalyst 22 releases NOx and is refreshed with the result of recovering the NOx absorbing performance.

When the diesel engine 1 is put in an accelerative operating condition, the split fuel injection control for the primary fuel injection is implemented so as to increase exhaust temperature and exhaust pressure. As a result, the turbosupercharger 25 increases its supercharging efficiency, so as to increase engine output torque by virtue of a sharp increase in the amount of air charge. That is, implementation of the split fuel injection control for the primary fuel injection during acceleration of the diesel engine 1 reduces a turbo lag and, in consequence, causes improvement of acceleration performance of the diesel engine 1. In this instance, when the amount of fuel injection is increased so as to rise catalyst temperature and the diesel engine 1 is put into an accelerative operating condition, the additional amount of fuel injection is divided into three parts and sprayed near through three split fuel injection at top dead center of a compression stroke. In this event, while slight aggravation of specific fuel consumption occurs, more improved acceleration performance and a sharp increase in catalyst temperature are caused.

With the fuel injection control system according to the first embodiment in which a variable geometry type of turbosupercharger (GVT) 25 is employed, the supercharging efficiency is increased by decreasing the turbine nozzle cross section (A) of the turbine 21 so as to increase the velocity of exhaust gas flow while the diesel engine 1 is in a region of lower engine speeds or by increasing the turbine nozzle cross section (A) of the turbine 21 so as to increase the amount of exhaust gas flow while the diesel engine 1 is in a region of higher engine speeds, as a result of which more improved acceleration performance is caused. In addition, when the aggregate mileage cones to a somewhat great distance of, for example, several thousands Km, the catalyst 22 deteriorates due to absorption of sulfur components with the result of lowering its NOx absorbing performance. Therefore, when it is predicted that the catalyst 22 has absorbed sulfur components in excess, the temperature of catalyst 22 is estimated first like in the NOx release control. When the catalyst 22 is at a temperature that is insufficiently high to desorb SOx, the split fuel injection control for the primary fuel injection is implemented to rise catalyst temperature. On the other hand, when the catalyst 22 is at a sufficiently high, the SOx desorption control is implemented to increase the amount of fuel injection so as to bring an air-fuel ratio in the combustion chamber 4 lower than the stoichiometric air-fuel ratio and the additional amount of fuel injection is made in an early half of an intake stroke. The amount of fuel injection is increased more during SOx desorption than during NOx release for the reason that, since SOx is stronger affinity for Ba than NOx, it is necessary to increase oxidizing components in exhaust gas in order to desorb SOx. In this way, the SOx desorption control causes the catalyst 22 to desorb SOx with an effect of recovering NOx absorption performance.

Following description is directed to conditions of the split fuel injection control for the primary fuel injection.

As was previously described, splitting the primary fuel injection into a plurality of parts and spraying split parts of fuel at a point of time near top dead center of a compression stroke enables the energy of exhaust gas to increase due to improvement of mechanical efficiency which is caused by prolongation of effective combustion time in addition to realizing promoted atomization of fuel and significantly improved conditions of fuel combustion. In order to attain the effect, it is necessary to set a suitable number of times of split fuel injection, a fuel injection time for each split fuel injection (a time for which the fuel injector remains open) and an injection interval Δ*t* between each adjacent split fuel injection in order to prevent fuel drops supplied into the combustion chamber 4 from reuniting with one another and keep combustion without a break. Therefore, in order to find out suitable conditions for the split fuel injection control for primary fuel injection, the relationships of exhaust gas temperature, exhaust gas pressure and specific fuel consumption relative to a change in crank angle at an end of fuel injection relative to different injection intervals Δt were investigated on three fuel injection modes, namely one-shot fuel injection where a basic amount of fuel complying with a demanded engine output torque is sprayed all at once at a point of time near top dead center of a compression stroke, a case of two-split fuel injection where a basic amount of fuel complying with a demanded engine output torque is divided into two parts and sprayed at two times at a point of time near top dead center of a compression stroke, and a case of three-split fuel injection where a basic amount of fuel complying with a demanded engine output torque is divided into three parts and sprayed at three times at a point of time near top dead center of a compression stroke.

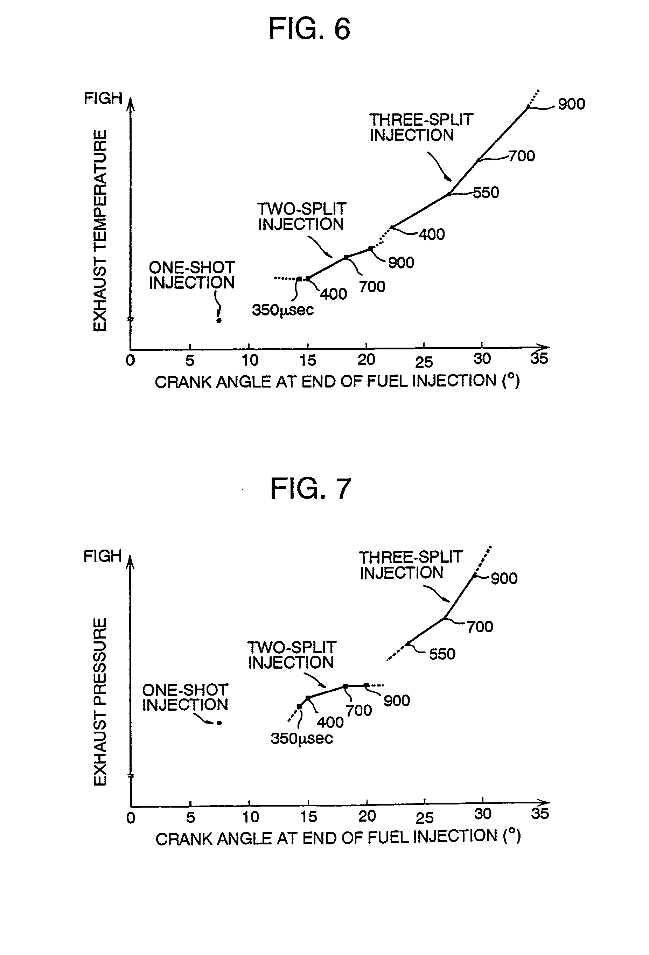

Figures 6 - 13 show the experimental results of measurements made with various injection intervals Δ*t* between 350 micro seconds and 900 micro seconds on the two-split fuel injection and the three-split fuel injection. Measurements were made by operating a 2000 cc four-cylinder diesel engine equipped with a variable geometry turbosupercharger 25 at approximately 1500 rpm under a relatively low engine load.

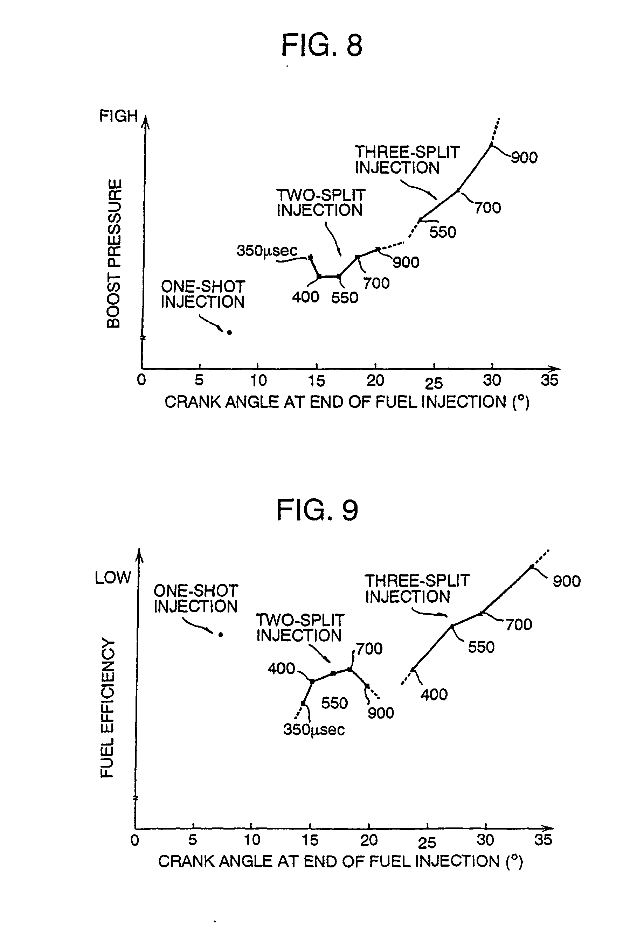

As apparent from Figure 6 which shows the relationship of exhaust gas temperature relative to crank angle at the end of final fuel injection, the two-split fuel injection yields an increase in exhaust gas temperature greater than the one-shot fuel injection, and the three-split fuel injection yields an increase in exhaust gas temperature greater than the two-split fuel injection. In the region of injection interval Δ*t* between 350 micro seconds and 900 micro seconds, the exhaust gas temperature increases as the injection interval Δ*t* is prolonged. As apparent from Figure 7 which shows the relationship of exhaust gas pressure relative to crank angle at the end of final fuel injection, In the region of injection interval Δ*t* between 350 micro seconds and 900 micro seconds, the exhaust gas pressure increases with an increase in the number of times of split fuel injection and with an increase in injection interval Δ*t*. That is, when dividing the amount of fuel injection into several parts and spraying them at several times, the end of combustion is delayed, so that the energy of exhaust gas increases as a matter of course and the combustibility is improved. Accordingly, the energy of combustion itself increases even though the amount of fuel is unchanged, both exhaust gas temperature and exhaust gas pressure are elevated as shown in Figures 6 and 7. An increase in the energy of exhaust gas improves supercharging performance of the turbosupercharger 25 with an effect of elevating supercharging pressure (boost pressure) as apparent in Figure 8.

As apparent in Figure 9 which shows the relationship of fuel consumption relative to crank angle at the end of final split fuel injection, the two-split fuel injection yields more significant improvement of fuel consumption than the one-shot fuel injection. While the three-split fuel injection yields a slight improvement of fuel consumption for shorter injection intervals Δ*t*, it encounters aggravation of fuel consumption as the injection interval Δ*t* is prolonged. This is because, while the split fuel injection provides improvement of combustibility and mechanical efficiency, but causes a decline in thermal efficiency. The result of above investigation clarifies that it is preferred that a point of time at which fuel injection comes to end is not too much delayed.

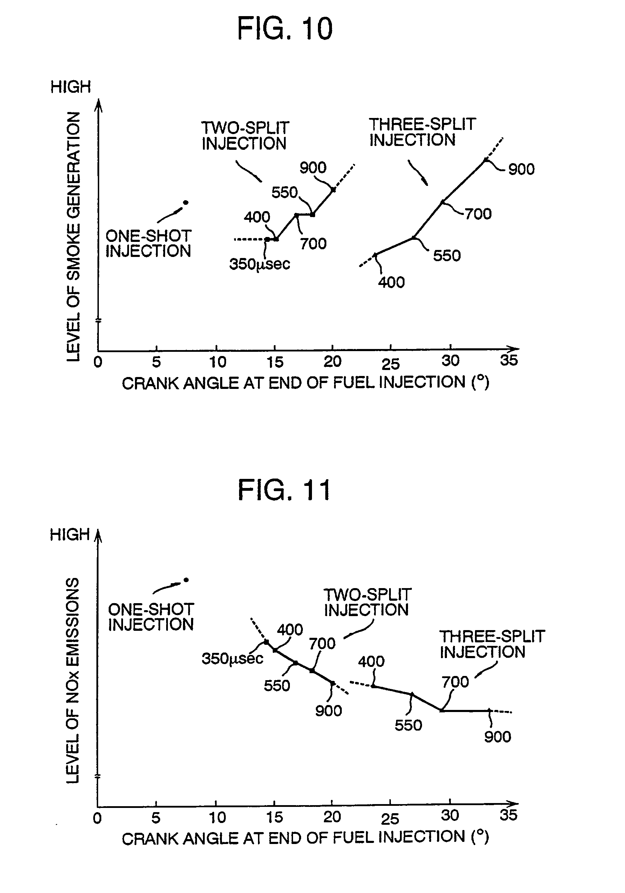

Figure 10 shows the relationship of a level of smoke generation relative to crank angle at the end of final fuel injection. It is apparent from Figure 10 that both two-split fuel injection and three-split fuel injection yield a reduction in level of smoke for shorter injection intervals Δ*t* and an increase in level of smoke as the injection interval Δt is prolonged.

Figure 11 shows the relationship of level of NOx emissions relative to crank angle at the end of final fuel injection. It is apparent from Figure 11 that both two-split fuel injection and three-split fuel injection yield a reduction in level of NOx emissions for longer injection intervals Δt in contrast to smoke.

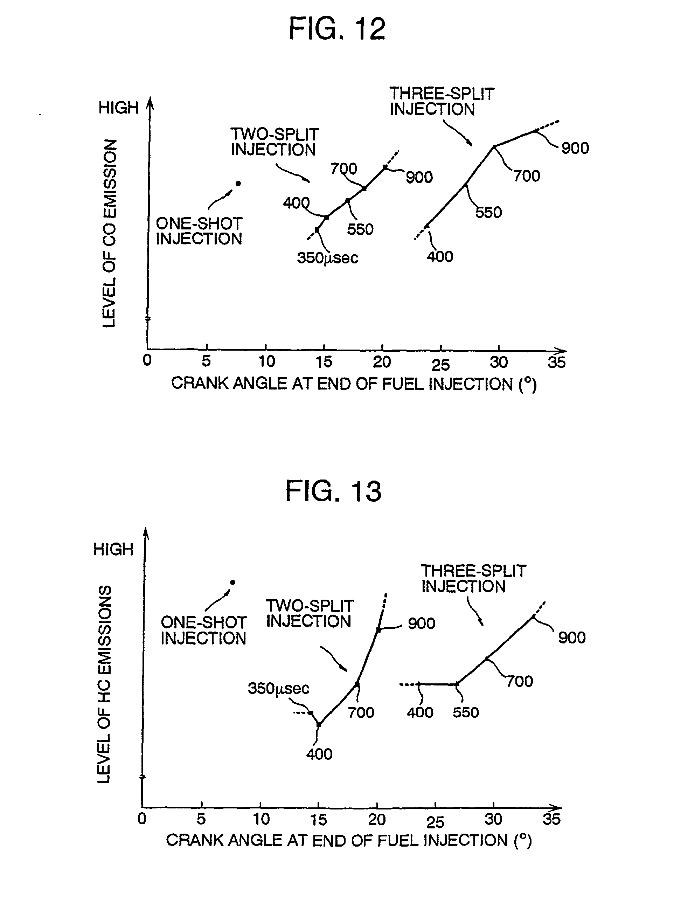

Figures 12 and 13 show the relationship of levels of CO and HC emissions relative to crank angle at the end of final fuel injection. It is apparent from Figures 12 and 13 that CO and HC emissions have an inclination to increase in level like smoke.

As proved from the above investigation, paying attention to the number of times of split fuel injection, three-split fuel injection causes rises in exhaust gas temperature, exhaust gas pressure and supercharging pressure with an effect of lowering NOx emissions. Further, as long as the injection interval Δ*t* is shot, smoke and CO emission do not increase in level regardless of the number of times of split fuel injection and, in some cases decreases. Both two-split fuel injection and three-split fuel injection cause a reduction of HC emission greater than the one-shot fuel injection.

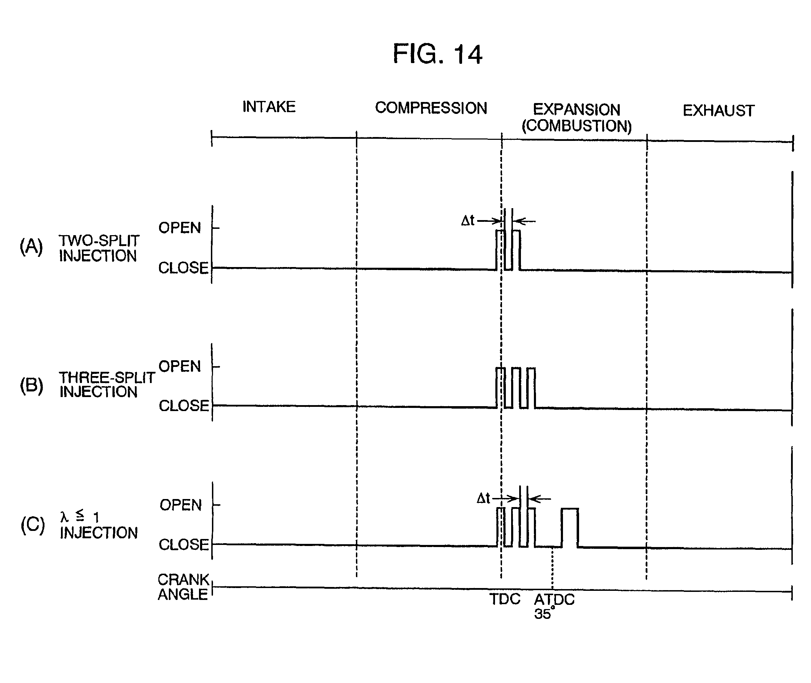

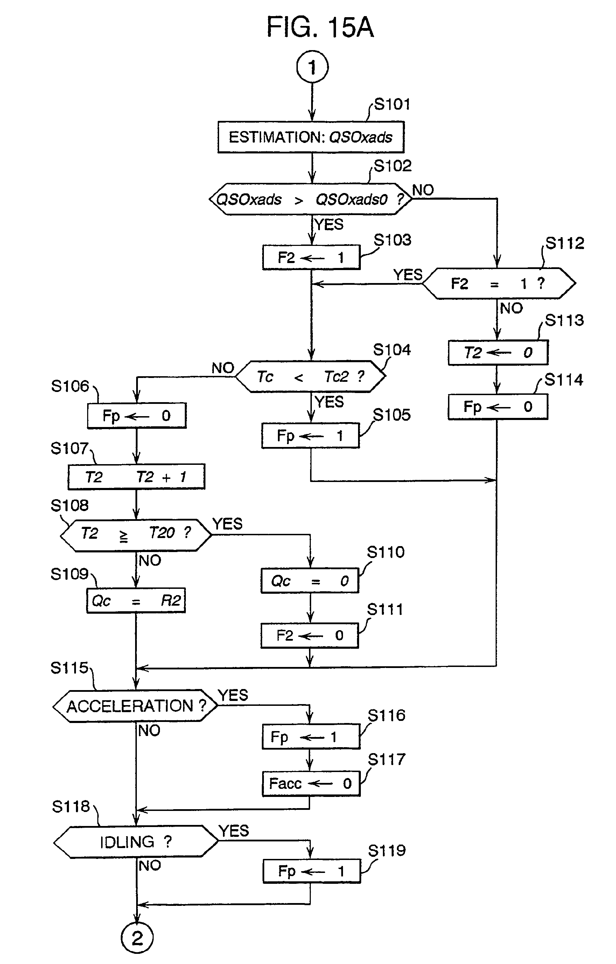

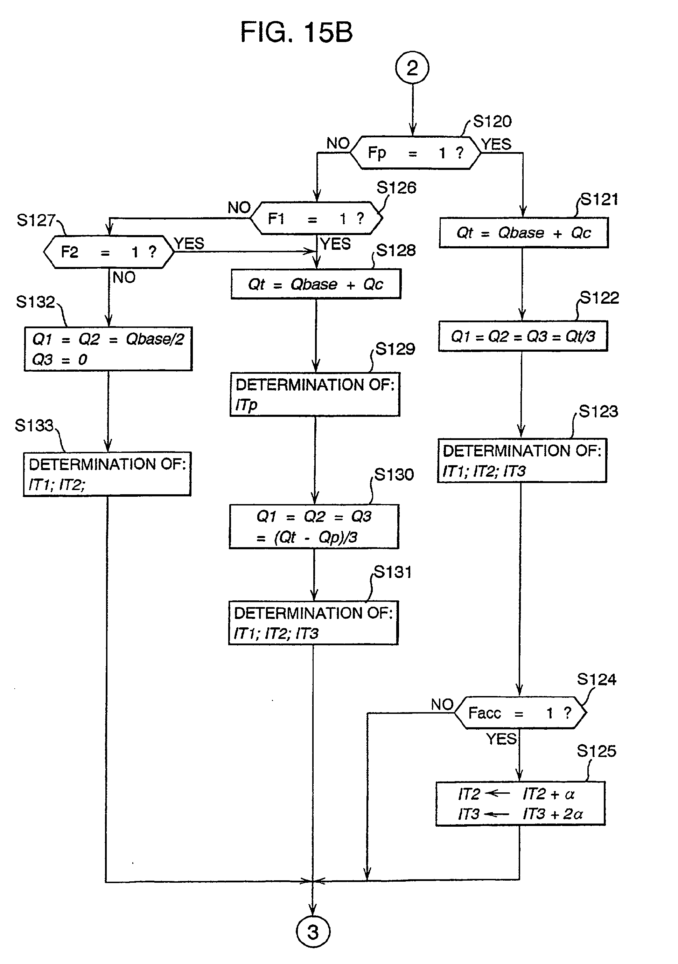

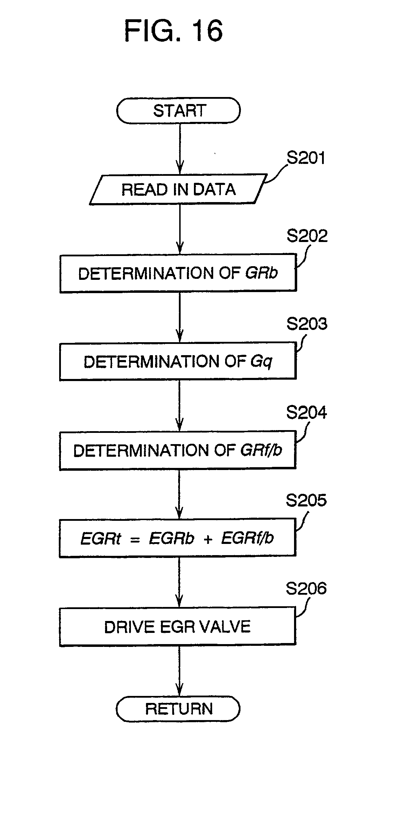

Figures 15A to 15C and 16 show a fuel injection control system in accordance with another embodiment of the present invention which is installed to the diesel engine control system shown in Figure 1. In the second embodiment, as shown in Figure 14, a basic amount of fuel is sprayed through two-split fuel injection at a point of time near top dead center of a compression stroke during ordinary engine operation or through three-split fuel injection at a point of time near top dead center of a compression stroke when there is a demand for increasing catalyst temperature or a demand for engine acceleration. Further, fuel is sprayed through secondary fuel injection between an expansion stroke and an adjacent exhaust stroke in addition to a basic amount of fuel that is sprayed through three-split fuel injection for primary fuel injection at a point of time near top dead center of a compression stroke during ordinary engine operation during implementation of NOx release control or SOx desorption control with the intention of refreshing the catalyst 22.

Figures 15A to 15C are a sequence routine of fuel injection control according to the second embodiment which follows steps S1 - S19 of the sequence routine illustrated by the flow chart shown in Figure 5A.

Subsequently to determining an additional amount of fuel injection *Qc* as a value *R1* at step S14, setting up or down the split fuel injection control flag Fp (Fp = 1 or 0) at step S10 or S19, or resetting down the NOx release control flag F1 down (F1 = 0) at step S16 (see Figure 5A), the control proceeds a first block at step S101 shown in Figure 15A. At step S101, an amount of adsorbed SOx *QSOxads* is estimated to determine a degree of S-poisoning of the catalyst 22. Subsequently to the estimation of the amount of adsorbed SOx *QSOxads* at step S101, a decision is made at step S102 as to whether the estimated amount of adsorbed SOx *QSOxads* is in excess of a predetermined amount of adsorbed NOx *QSOxads0.* When the answer to the decision is negative, the control proceeds to a decision at step S112. On the other hand, when the answer to the decision is affirmative, the control proceeds to steps SP103 through SP112 for SOx desorption. When the estimated amount of adsorbed SOx *QSOxads* is in excess of the predetermined amount of adsorbed SOx *QSOxads0,* after setting up a SOx desorption control flag F2 (F2 = 1) at step S103, a decision is subsequently made at step S104 as to whether the estimated catalyst temperature *Tc* is lower than a second critical temperature *Tc2* of, for example, 450°C which is the threshold of promotion of SOx desorption. When the answer to the decision is affirmative, then, the split fuel injection control flag Fp is set up (Fp = 1) at step S105. On the other hand, when the answer to the decision is negative, this indicates that the catalyst 22 has been warmed up sufficiently to promote SOx desorption, then, after setting down the split fuel injection control flag Fp (Fp = 0) at step S106 and changing a second timer count *T2* by an increment of one at step S107, a decision is made at step S108 as to whether the second timer count *T2* is greater than a second threshold value *T2*_{*0*} for the period of implementation of the SOx desorption control. While the answer to the decision remains negative, i.e. until the second threshold value *T20* is over, an additional amount of fuel injection *Qc* is determined as a value *R2* that is to be sprayed additionally to the basic amount of fuel injection *Qbase* so as to bring the average air-fuel ratio in the combustion chamber 4 below the stoichiometric air-fuel ratio.

On the other hand, when the answer to the decision concerning second timer count *T2* relative to the second threshold value *T2*_{*0*} made at step S108 is affirmative, then, the additional amount of fuel injection *Qc* is determined as a value of zero (0) at step S110 and, subsequently, the SOx desorption control flag F2 is set down (F2 = 0) at step S111. On the other hand, when the answer to the decision concerning the estimated amount of adsorbed SOx *QSOxads* relative to the predetermined amount of adsorbed SOx *QSOxads0* made at step S102 is negative, another decision is made at step S112 as to whether the SOx desorption control flag F2 is up (F2 = 1). When the answer to the decision is affirmative, then, the control proceeds to steps S104 through S111. However, when the answer to the decision is negative, this indicates that it is the period of interruption of the SOx desorption control, then, the second timer count *T2* is reset to zero at step S113 and the split fuel injection control flag Fp is reset down (Fp = 0) at step S114.

Subsequently to step S105, S109, S111 or S114, a decision is made at step S115 as to whether the diesel engine 1 is in an accelerative operating condition. This decision is made on the basis of, for example, changes in accelerator travel and engine speed. When the diesel engine 1 is not in any accelerative operating condition, another decision is made at step S118 as to whether the diesel engine 1 is idling. On the other hand, when the diesel engine 1 is in an accelerative operating condition, after setting up the split fuel injection control flag Fp (Fp = 1) at step S116 and setting up an acceleration flag Face (Face = 1) at step S117, the other decision as to idling is made at step S118. In this instance, the acceleration flag Facc indicates that the diesel engine 1 is in an accelerative operating condition when it is up (Face = 1) and that the diesel engine 1 is not in any accelerative operating condition when it is down (Face = 0).

Thereafter, the control proceeds to another decision at step S120 directly when the answer to the decision made at step S118 is negative, i.e. when the diesel engine 1 is idling, or after setting up the acceleration flag Facc (Facc = 1) at step S119 when the answer to the decision made at step S118 is affirmative, i.e. when the diesel engine 1 is not idling.

At step S120, a decision is made whether the split fuel injection control flag Fp is up (Fp = 1). When the answer to the decision is negative, the control proceeds to step S126. On the other hand, when the answer to the decision is affirmative, a total amount of fuel injection *Qt (Qbase* + *Qc)* at step S121. Subsequently, after dividing the total amount of fuel injection *Qt* into three equal parts as first, second and third amounts of split fuel injection *Q1, Q2* and *Q3*, at step S122, split fuel injection timings *IT1, IT2* and *IT3* are determined for the first, second and third split fuel injection of the first, second and third amounts of fuel injection *Q1, Q2* and *Q3,* respectively, at regular injection intervals Δ*t* at step S123. As shown by three-split fuel injection in Figure 14, the first split fuel injection timing *IT1* is the same as the basic fuel injection timing *ITbase* and the first to third split fuel injection are timed at regular injection intervals Δ*t* which are determined according to a current engine operating condition. Specifically, injection intervals are experimentally determined between approximately 500 micro seconds and approximately one millisecond with respect to different engine operating conditions and stored in an injection interval control map. The injection interval Δ*t* for engine idling conditions (a specific region of lower engine loads) is set to a relatively large value in this injection interval control map, as a result of which NOx generation is controlled as shown in Figure 11, so that a level of NOx emissions is sufficiently lowered even when the exhaust gas recirculation (EGR) 24 is controlled so as to reduce a proportion of exhaust gas that is admitted into an intake air stream relative to the total amount of intake air.

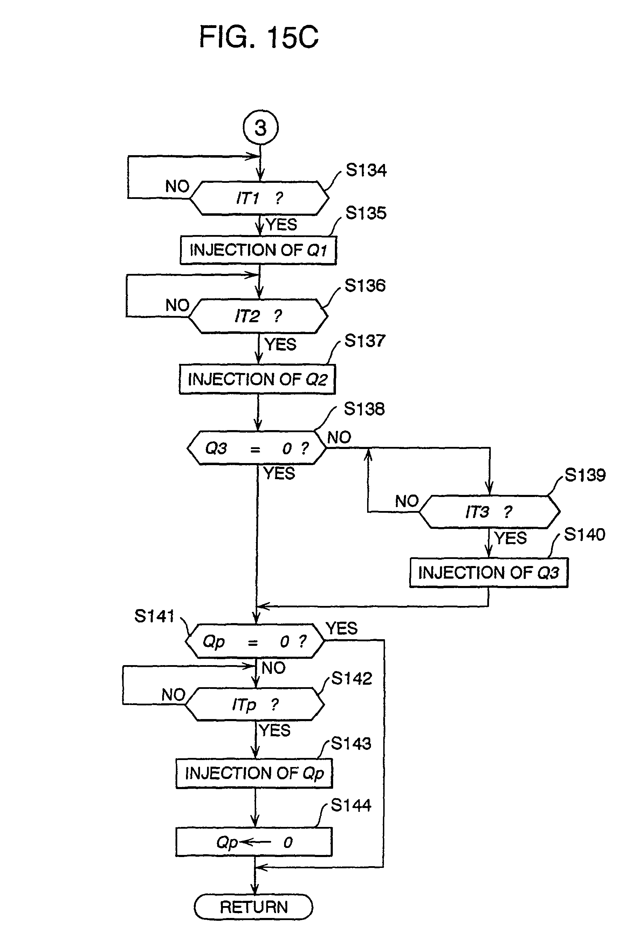

After determining the second and third split fuel injection timings *IT2* and *IT3* at step S123, a decision is made at step S124 as to whether the acceleration flag Face is up (Facc = 1). When the answer to the decision is affirmative, this indicates that the diesel engine 1 is in an accelerative operating condition, then, after prolonging the injection intervals Δ*t* between the first and second split fuel injection and between the second and third split fuel injection, respectively, by an increment of a time α so as to retard the second split fuel injection by a time α and the third split fuel injection by a time *2*α, the control proceeds to a decision at step S134 in Figure 15C. On the other hand, when the answer to the decision is negative, this indicates that the diesel engine 1 is not in an accelerative operating condition, then, the control proceeds directly to a decision at step S134 in Figure 15C. That is, as apparent from the above description, when the split fuel injection is consecutively implemented three times when the split fuel injection flag Fp remains up, i.e. in one of the cases, namely (1) the case where the catalyst 22 is insufficiently warmed up after a cold start of the diesel engine 1, (2) the case where, although the NOx release control is desired during engine operation, the catalyst 22 is warmed up before making a correction of the amount of fuel injection by additionally spraying fuel, (3) the case where the diesel engine 1 is idling, and (4) the case where the diesel engine 1 is in an accelerative operating condition. Further, when the diesel engine 1 is in an accelerative operating condition, the second and third split fuel injection are retarded so as to cause a sufficient rise in the energy of exhaust gas with an effect of improving accelerative performance of the diesel engine 1. In this instance, the primary fuel injection may be split to four to seven parts.

On the other hand, when the answer to the decision concerning the split fuel injection control flag Fp made at step S120 is negative, this indicates interruption of the split injection control of primary fuel injection, then, another decision is made at step S126 as to whether the NOx release control flag F1 is up (F1 = 1). When the answer to the decision is negative, another decision is subsequently made at step S127 as to whether the SOx desorption control flag F2 is up (F2 = 1). The control proceeds to step S128 when the NOx release control flag F1 is up (F1 = 1) or when the SOx desorption control flag F2 is up (F2 = 1) while the NOx release control flag F1 is down, or to step S132 when both NOx release control flag F1 and SOx desorption control flag F2 are down. At step S128, a total amount of fuel injection *Qt* (*Qbase* + *Qc*). An injection timing *ITp* for secondary fuel injection of an amount of fuel *Qp* is subsequently determined at step S129. Thereafter, subsequently to dividing the amount of fuel for the primary fuel injection which is obtained by subtracting the secondary amount of fuel injection *Qp* from the total amount of fuel injection *Qt* into three equal parts as first, second and third amounts of split fuel injection *Q1,* Q2 and *Q3,* at step S130, split fuel injection timings *IT1, IT2* and *IT3* are determined for the first, second and third split fuel injection of the first, second and third amounts of fuel injection *Q1, Q2* and *Q3,* respectively, at step S131. In this instance the injection intervals Δ*t* are determined between approximately 500 micro seconds and one millisecond. That is, when the NOx release control flag F1 is up (F1 = 1) or when the SOx desorption control flag F2 is up (F2 = 1), in other words, in one of the cases, namely (1) the case where the catalyst 22 is in excess of absorbed NOx and is sufficiently warmed up while the diesel engine 1 is not idling nor accelerated and (2) the case where it is predicted that the catalyst 22 encounters aggravation of catalyzing performance due to S-poisoning and is at a sufficiently high temperature while the diesel engine 1 is not idling nor in accelerated, while the amount of fuel injection is increased so as to bring the average air-fuel ratio in the combustion chamber 4 near or below the stoichiometric air-fuel ratio, i.e. to lower the oxygen content of exhaust gas below 1%, the increased amount of fuel injection is implemented as the secondary fuel injection at a point of time in an early half of an expansion stroke and the remaining amount of fuel injection is implemented as primary fuel injection through three-split fuel injection at a point of time neat dead top center of a compression stroke. In this instance, the primary fuel injection may be split to four to seven parts. Further, the secondary fuel injection may be implemented between an expansion stroke and an exhaust stroke after implementation of the primary fuel injection.

On the other hand, when both answers to the decisions made at steps S126 and S127 are negative, this indicates that neither the NOx absorption control nor the SOx adsorption control is implemented, then, the basic amount of fuel injection *Qbase* is divided into two equal parts as amounts of first and second split fuel injection *Q1* and *Q2* for two-split fuel injection at step S132. Concurrently with this, an amount of third fuel injection *Q3* is determined zero (0). Subsequently, split fuel injection timings *IT1* and *IT2* are determined for the first and second split fuel injection of the first and second amounts of fuel injection *Q1* and *Q2*, respectively, at step S133. In this instance, the injection intervals Δt are relatively shortened and determined between approximately 100 and 900 micro seconds. That is, during ordinary engine operation, in other words, it is not after a cold start of the diesel engine 1, it is not under implementation of the NOx release control, or while the diesel engine 1 is not idling nor in an accelerative operating condition, the primary fuel injection is made through two-split fuel injection and the injection interval Δt is relatively shortened with an effect of improving fuel consumption as shown in Figure 9.

When the split fuel injection timings are determined at step S125, S131 or S133, or when it is determined that the diesel engine 1 is not in an accelerative operating condition at step S124, the control proceeds to a process through steps S134 to S144 in Figure 15C for two- or three-split fuel injection.

At step S134, a decision is made whether the first split fuel injection timing *IT1* has been reached. This decision is made on the basis of a signal of crank angle and repeated until the first split fuel injection timing *IT1* is reached. At the moment the first split fuel injection timing *IT1* is reached, the first split fuel injection is implemented to spray the first amount of fuel injection *Q1* into the combustion chamber 4 at step S135. Subsequently, a decision is made at step S136 whether the second fuel injection timing *IT2* has been reached. After waiting until the second fuel injection timing *IT2* has been reached, the second split fuel injection is implemented to spray the second amount of fuel injection *Q2* into the combustion chamber 4 at step S137. Further, a decision is made at step S138 whether the third amount of fuel injection *Q3* is zero. When the answer to the decision is negative, the control implements the third split fuel injection at step S140 when the third fuel injection timing *IT3* has been reached at step S139. When the answer to the decision regarding the third amount of fuel injection *Q3* made st step S138 is negative, or after implementation of the third split fuel injection at step S140, a decision is made at step S141 as to whether the amount of fuel *Qc* for the secondary fuel injection is zero. When the answer to the decision is affirmative, no secondary fuel injection is not implemented. However, when the answer to the decision is negative, the secondary fuel injection is implemented. That is, a decision is subsequently made at step S142 as to whether the secondary fuel injection timing *ITp* has been reached. This decision is made on the basis of a signal of crank angle and repeated until the secondary fuel injection timing *ITp* is reached. At the moment the secondary fuel injection timing *ITp* is reached, the secondary fuel injection is implemented to spray the amount of fuel injection *Qp* into the combustion chamber 4 at step S143 and the amount of fuel injection *Qp* is set to zero at step S144. When the answer to the decision regarding the amount of fuel *Qp* for the secondary fuel injection made st step S141 is affirmative, or after implementation of the secondary fuel injection through steps S141 to S144, the sequence logic orders return for another fuel injection control sequence routine.

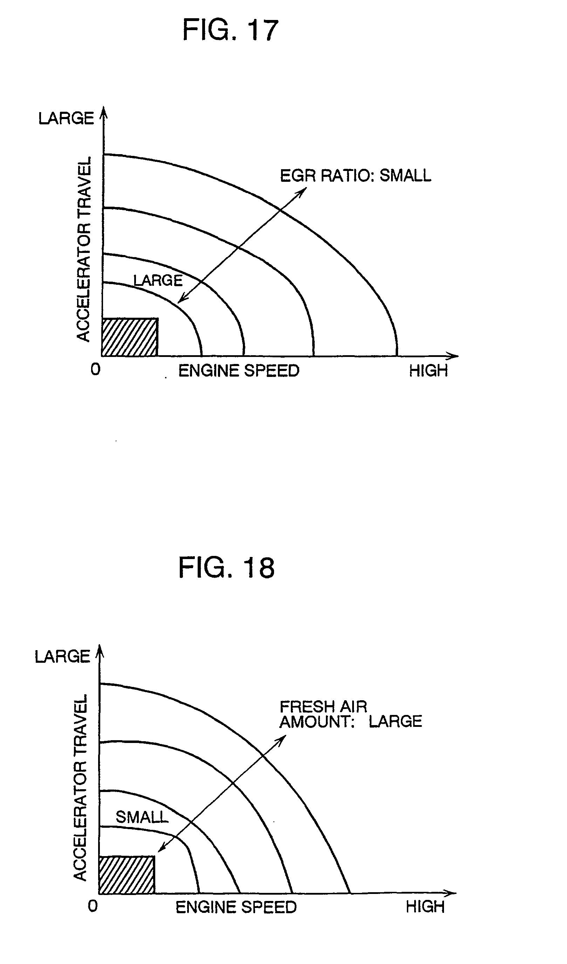

Figure 16 is a flow chart illustrating a sequence routine of exhaust gas recirculation (EGR) control which is periodically repeated. When the sequence logic commences and control proceeds to a block at step S201 where various control parameters are read. The control parameters include at least a crank angle detected by the crank angle sensor 9, an intake air flow rate detected by the air flow sensor 11 and an accelerator travel detected by the accelerator travel sensor 32. Subsequently, a basic exhaust gas recirculation ratio *EGRb* is determined on the basis of an engine speed which is computed on the basis of the crank angle and the accelerator travel at step S202. Basic exhaust gas recirculation ratios *EGRb* are experimentally determined suitably for engine speeds as shown in Figure 17 and stored in the form of control map in the memory of the engine control unit (ECU) 35. As apparent in Figure 17, the basic exhaust gas recirculation ratio *EGRb* is determined so as to become lower as the accelerator travel becomes small, i.e. to make a proportion of exhaust gas that is recirculated relative to the total amount of intake air larger in a region of lower engine loads than in a region of higher engine loads, and to become higher as the engine speed is lowered. However, the basic exhaust gas recirculation ratio *EGRb* is set to be lower in a region of engine idling (specific region of lower engine loads) such as shaded in Figure 17 than in a region of middle engine loads between the higher and lower regions.

Thereafter, a target amount of fresh intake air *Gq* is determined on the basis of the accelerator travel and engine speed at step S203. Target amounts of fresh intake air are experimentally determined suitably for engine speeds as shown in Figure 18 and stored in the form of control map in the memory of the engine control unit (ECU) 35. The term "the amount of fresh intake air" as used herein refer to the amount of intake air exclusive of recirculated exhaust gas and blow-bye gas that are introduced into the combustion chamber 4 and the amount of intake air that is detected by the air flow sensor 11. The amount of fresh intake air, which is closely related to exhaust gas recirculation ratios, is usually reduced by an amount of recirculated exhaust gas that increases with an increase in exhaust gas recirculation ratio. As apparent in Figure 18, the target amount of fresh intake air *Gq* is determined so as to become larger as the accelerator travel becomes larger and as the engine speed becomes higher. However, like the basic exhaust gas recirculation ratio *EGRb,* the target amount of fresh intake air *Gq* is set to be smaller in a region of engine idling (specific region of lower engine loads) such as shaded in Figure 18 than in a region of middle engine loads between the higher and lower regions.

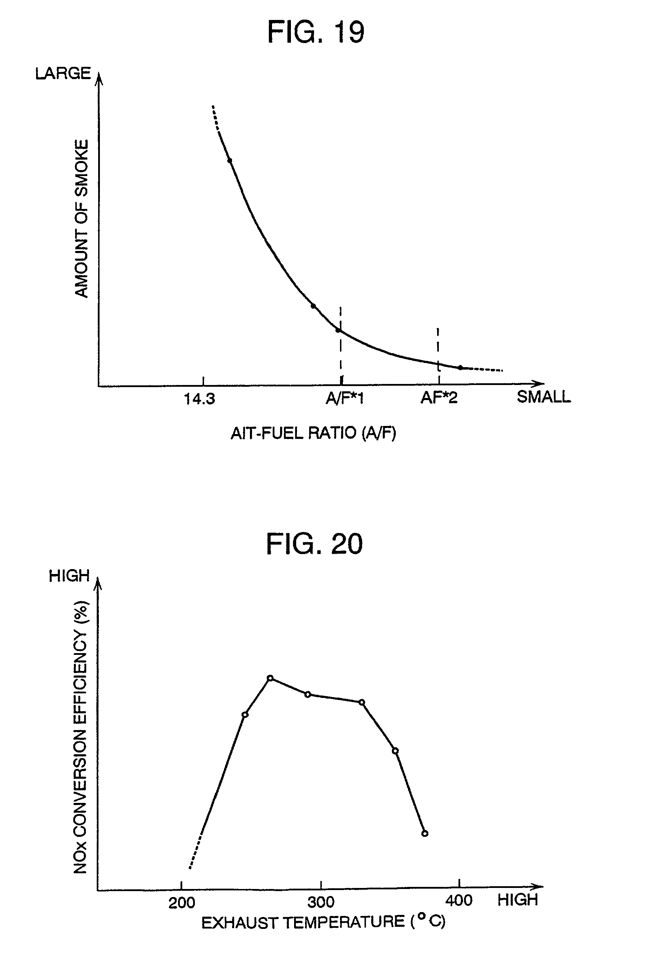

Although, in a direct-injection type of diesel engine, generation of NOx is generally controlled by increasing exhaust gas recirculation ratio, it is general that the average air-fuel ratio in the combustion chamber 4 changes toward a lower side with an increase in exhaust gas recirculation ratio. As shown in Figure 19, the direct-injection type of diesel engine has a tendency to sharply increase the amount of smoke as the average air-fuel ratio in the combustion chamber 4 approaches the stoichiometric air-fuel ratio (14.3). Therefore, in the control maps of basic exhaust gas recirculation ratio and target amount of fresh intake air, the basic exhaust gas recirculation ratio and the target amount of fresh intake air are determined such that the average air-fuel ratio in the combustion chamber 4 is as small as possible, such as shown as A/F*1 in Figure 19, within an extent where the amount of smoke kept from sharply increasing. In particular, in order that the average air-fuel ratio in the combustion chamber 4 such as A/F*2 is considerably higher as compared to A/F*1 in the region of engine idling, the basic exhaust gas recirculation ratio *EGRb* is set to be on the small side in the control map, and the target amount of fresh intake air *Gq* is set to be on the large side in the control map. That is, since, while the diesel engine 1 is in the region of engine idling, the exhaust gas recirculation (EGR) valve 24 is put in a relatively small opening, it is possible to rapidly increase the amount of intake air into the combustion chamber 4 by closing the exhaust gas recirculation (EGR) valve 24 immediately when the diesel engine 1 changes in operating condition from an engine idling condition to an accelerative operating condition. Therefore, while the diesel engine 1 is improved in acceleration performance, the air-fuel ratio in the combustion chamber 4 is kept from changing smaller in excess upon an occurrence of a shift of the diesel engine 1 in operation to acceleration, so as to restrict an increase in the amount of smoke at the beginning of acceleration. In this instance, in the region of engine idling, since the generation of NOx is controlled by implementing the three-split fuel injection, the level of NOx emissions is prevented from raising in excess even when setting the exhaust gas recirculation (EGR) ratio on the small side.

Thereafter, at step S204, a feedback control value of exhaust gas recirculation ratio *EGRf*/*b* is determined on the basis of a deviation of an amount of fresh intake air detected by the air flow sensor 11 from the target amount of fresh intake air *Gq.* Feedback control exhaust gas recirculation ratios *EGRf*/*b* are experimentally determined suitably for deviations of amounts of fresh intake air from target amounts of fresh intake air *Gq* and stored in the form of control map in the memory of the engine control unit (ECU) 35. In the control map, the feedback control exhaust gas recirculation ratio *EGRf*/*b* takes a negative value when the target amount of fresh intake air *Gq* is greater than the amount of fresh intake air detected by the air flow sensor 11 or a positive value when the target amount of fresh intake air *Gq* is less than the amount of fresh intake air detected by the air flow sensor 11. In both cases, the absolute value of the feedback control exhaust gas recirculation ratio *EGRf*/*b* is set so as to become greater with an increase in the deviation of fresh intake air. In this instance, the control map is provided with a dead zone for deviations close to zero. Subsequently, at step S205, a target exhaust gas recirculation ratio *EGRt* is determined by adding the feedback control exhaust gas recirculation ratio *EGRf*/*b* to the basic exhaust gas recirculation ratio *EGRb.* Finally, after actuating the electromagnetic valve 28 with a signal representative of the target exhaust gas recirculation ratio *EGRt* to drive the exhaust gas recirculation (EGR) valve 24 at step S206, the sequence logic orders return for another exhaust gas recirculation control sequence routine.

With the exhaust gas recirculation control, NOx generation is lowered by securing the amount of exhaust gas recirculated into the combustion chamber 4 which is basically achieved by increasing the exhaust gas recirculation ratio *EGR* relatively large in the region of lower engine loads. On the other hand, sufficient engine output is obtained according to engine loads by an increase in the amount of fresh intake air which is provided by gradually lowering the exhaust gas recirculation ratio *EGR* with an increase in engine load. Further, while the diesel engine 1 is in a region of engine idling, smoke is temporarily kept from increasing upon an occurrence of a shift of the diesel engine 1 in operation to acceleration by changing opening of the exhaust gas recirculation (EGR) valve 24 relatively small.

As apparent from the above description of the fuel injection control system of the second embodiment, in addition to the operation and effects that are provided by the fuel injection control system of the first embodiment, the fuel consumption is improved in engine operating conditions that are most frequently used and fuel consumption covering the mileage of the vehicle is significantly improved by implementing the two-split fuel injection during ordinary operation of the diesel engine 1. Moreover, the two-split fuel injection causes a rise in the energy of exhaust gas which is accompanied by improvement in supercharging efficiency by the turbosupercharger 25 and keeps the catalyst 22 at a temperature on a higher side and lowers levels of HC and CO emissions as compared to the one-shot fuel injection. Further, it is possible to lower levels of CO emission and smoke by making the injection interval shorter.

Although it is considerably frequent for the diesel engine 1 to shift in operation to an accelerative operating condition from idling condition due to implementing the three-split fuel injection during engine idling so as to restrict NOx generation to a lower amount and causing the exhaust gas recirculation (EGR) valve 24 to provide a small opening by changing the exhaust gas recirculation ratio *EGR* by a decrement corresponding to the lowered amount of NOx generation, an increase in the amount of smoke due to a drop in air-fuel ratio can be mitigated by keeping a delay in closing operation of the exhaust gas recirculation (EGR) valve 24 to a minimum at the shift in operation to an accelerative operating condition from idling condition. Moreover, since the three-split fuel injection can causes a more increase in the energy of exhaust gas, the shift to an accelerative operating condition is smooth. In this instance, the amount of fuel injection is small during engine idling, so as to keep the diesel engine from encountering significant aggravation of combustion performance over the entire region of engine operating conditions.

Similarly to the fuel injection control system of the first embodiment, the energy of exhaust gas is more increased so as to enhance a supercharging effect of the turbosupercharger 25 by changing the injection interval *Δt* by an increment of a time α. At this time, generation of smoke is restricted by prolonging the injection interval Δ*t* to approximately one millisecond.

The fuel injection control systems A of the first and second embodiments may be modified. For example, in place of dividing the basic amount of fuel injection *Qbase* into three equal parts and spraying them through the three-split fuel injection in order to rise the temperature of catalyst 22, it may be done to divide the basic amount of fuel injection *Qbase* into unequal parts. Further, the amount of fuel may be increased so as to provide an average air-fuel ratio in the combustion chamber equal to or lower than a stoichiometric air-fuel ratio. This yields an enhanced rise in the temperature of exhaust gas while providing slight aggravation of specific fuel consumption as compared to a case where no increase in the amount of fuel is made, so as to realize a more rapid rise in the temperature of catalyst 22.

The catalyst 22 may be replaced with various types well known to those skilled in the art such as a NOx deoxidization and conversion type of catalyst and an oxidization type of catalyst that oxidizes and converts HC, CO and SOF in exhaust gas at a high temperature. For example, Such a catalyst may comprise a first or upstream side Ag/Al2O3 catalyst which contains Ag supported on alumina as a supporting material and a second or downstream side Pt⁺-MFI catalyst which contains Pt supported on MFI (composite zeolite ZSM-5) as a support material by an ion-exchange method or an impregnation method. This catalyst deoxidizes and converts NOx under a presence of HC as a deoxidizing material even while the oxygen content of exhaust gas is high, so that the catalyst shows purification performance having temperature dependency such as shown in Figure 20.

In the case where the NOx deoxidization and conversion type of catalyst is used, the amount of fuel may be increased so as to cause an increase in the amount of deoxidizing components in exhaust gas every period of engine operation or when the catalyst has lowered its purification performance and sprayed through the primary fuel injection only or both primary and secondary fuel injection between an expansion stroke and a compression stroke. Further, the amount of fuel may be sprayed through the split fuel injection when the catalyst is at lower temperatures through steps S128 to S131. This makes it possible to cause concurrently promotion of a rise in catalyst temperature and supply of deoxidizing components to the catalyst, so as to cause the catalyst to display improved exhaust gas purifying performance.

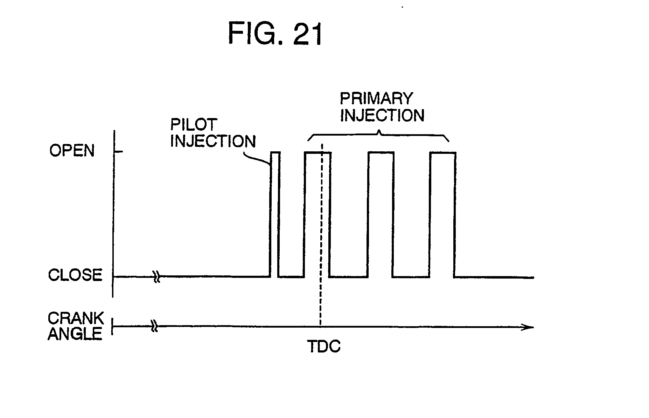

In the above described embodiments, the pilot fuel injection may be implemented before the three-split fuel injection as shown in Figure 21. Specifically, the pilot fuel injection is implemented to spray approximately 1/20 to 1/10 of the basic amount of fuel immediately before the primary fuel injection. This pilot fuel is not related to combustion immediately after injection but catches fir to form a pilot flame with a rise in pressure in the combustion chamber that is caused by upward travel of the piston before the succeeding primary fuel injection. As a result, a rapid rise in combustion pressure is moderated during first premixed combustion, so as to lower noises and vibrations of the diesel engine.

In the second embodiment, generation of NOx may be restrained by implementation of the two-split fuel injection like during ordinary engine operation at relatively prolonged injection intervals Δ*t* of, for example, more-than-700 micro seconds even during engine idling in place of implementation of the three-split fuel injection.

## Claims

1. A fuel injection control system for a diesel engine for spraying fuel into a combustion chamber (4) of the diesel engine (1) through a fuel injector (5) disposed so as to front the combustion chamber (4), said fuel injection system including fuel injection control means (9, 32, 35, 35d) for monitoring demanded output torque of the diesel engine (1), determining an amount of fuel to be sprayed through the fuel injector (5) according to the operating condition, dividing the determined amount of fuel into a plurality of parts of fuel and actuating the fuel injector (5) intermittently to spray said divided parts of fuel through split level fuel injection at specific intervals at a point of time near top dead center of a compression stroke so as to keep combustion in the combustion chamber (4) from discontinuing,
wherein said fuel injection control means (9, 32, 35, 35d) implements said split fuel injection at specified intervals in a range of from approximately 100 micro seconds to approximately one millisecond in such a way as to cause a second shot of said split fuel injection at a point of time after said top dead center of the compression stroke, and completes said split fuel injection before approximately 35° in crank angle after said top dead center of a compression stroke,
**characterized in that**
said diesel engine (1) is equipped with a purifying matter (22) in an exhaust line (20) operative to adsorb components in exhaust gas from the diesel engine (1) that deteriorate exhaust gas purifying performance of the purifying matter (22) and to release said components adsorbed by said purifying matter (22) at a temperature higher than a specified temperature so as thereby to purify exhaust gas from the diesel engine (1), and said fuel injection control means (9, 32, 35, 35d) estimates an amount of said components adsorbed by said purifying matter (22) and implements said split fuel injection while estimating an amount of said components adsorbed by said purifying matter (22) greater than a specified amount.

2. A fuel injection control system for a diesel engine as defined in claim 1, wherein
said fuel injection control means (9, 32, 35, 35d) implements said split fuel injection at specified intervals shorter than approximately 800 micro seconds.

3. A fuel injection control system for a-diesel engine as defined in one of the preceding claims, wherein
said fuel injection control means (9, 32, 35, 35d) divides said determined amount of fuel into more than two parts for said split fuel injection.

4. A fuel injection control system for a diesel engine as defined in one of the preceding claims, wherein said fuel injection control means (9, 32, 35, 35d) implements at least one of split number corrective control by which the number of parts of fuel into which the determined amount of fuel injection is varied greater and split interval corrective control by which said intervals of said split fuel injection are prolonged longer while estimating the amount of said components adsorbed by said purifying matter (22) to be greater than a specified amount.

5. A fuel injection control system for a diesel engine as defined in one of the preceding claims, wherein said diesel engine (1) is equipped with a turbocharger (25) operative to supercharge intake air with exhaust gas from the diesel engine (1), said turbosupercharger (25) being of a variable geometry type that is able to vary a velocity of an exhaust gas stream introduced into a turbine (21) of the turbosupercharger (25).

6. A fuel injection control system for a diesel engine as defined in one of the preceding claims, wherein said fuel injection control means (9, 32, 35, 35d) performs air-fuel ratio control by which an air-fuel ratio in the combustion chamber (4) is made lower than a stoichiometric air-fuel ratio so as to lower an oxygen content of exhaust gas while estimating an amount of said components adsorbed by said purifying matter (22) to be greater than said specified amount.

## Patentansprüche

1. Kraftstoffeinspritzsteuersystem für einen Dieselmotor zum Einspritzen bzw. Zerstäuben von Kraftstoff in eine Verbrennungskammer (4) des Dieselmotors (1) durch eine Kraftstoffeinspritzeinrichtung (5), welche derart angeordnet ist, um zu der Verbrennungskammer (4) gerichtet zu sein, wobei das Kraftstoffeinspritzsystem Kraftstoffeinspritzregel- bzw. -steuermittel (9, 32, 35, 35d) zum Überwachen eines geforderten Ausgangs- bzw. Abtriebsdrehmoment des Dieselmotors (1), Bestimmen einer Menge an Kraftstoff, welche durch die Kraftstoffeinspritzeinrichtung (5) gemäß dem Betriebs- bzw. Betätigungszustand einzuspritzen ist, Unterteilen der bestimmten Menge an Kraftstoff in eine Vielzahl von Teilen von Kraftstoff und intermittierendes Betätigen der Kraftstoffeinspritzeinrichtung (5) beinhaltet, um die unterteilten Teile an Kraftstoff durch eine Kraftstoffeinspritzung auf unterteiltem Niveau an bestimmten Intervallen zu einem Zeitpunkt nahe einem oberen Totpunkt eines Kompressionshub einzuspritzen, um eine Verbrennung in der Verbrennungskammer (4) von einer Unterbrechung abzuhalten,
wobei die Kraftstoffeinspritzsteuermittel (9, 32, 35, 35d) die unterteilte Kraftstoffeinspritzung an bestimmten Intervallen in einem Bereich von etwa 100 Mikrosekunden bis etwa eine Millisekunde in einer derartigen Weise implementieren, um einen zweiten Schuß der unterteilten Kraftstoffeinspritzung zu einem Zeitpunkt nach dem oberen Totpunkt des Kompressionshubs zu bewirken, und die unterteilte Kraftstoffeinspritzung vor ungefähr 35° im Kurbelwinkel nach dem oberen Totpunkt eines Kompressionshub abschließen,
**dadurch gekennzeichnet, daß**
der Dieselmotor (1) mit einem reinigenden bzw. Reinigungsstoff bzw. -mittel (22) in einer Abgasleitung (20) versehen bzw. ausgerüstet ist, welcher arbeitet bzw. operativ ist, um Komponenten im Abgas von dem Dieselmotor (1) zu ab- bzw. adsorbieren, welche eine Abgasreinigungsleistung des Reinigungsstoffs bzw. der Reinigungssubstanz (22) verschlechtern, und um die Komponenten, welche durch den Reinigungsstoff (22) adsorbiert sind, bei einer Temperatur höher als einer bestimmten Temperatur freizugeben bzw. abzugeben, um **dadurch** Abgas von dem Dieselmotor (1) zu reinigen, und die Kraftstoffeinspritzsteuermittel (9, 32, 35, 35d) eine Menge der Komponenten abschätzen, welche durch den Reinigungsstoff (22) adsorbiert sind, und die unterteilte Kraftstoffeinspritzung implementieren, während eine Menge der Komponenten, welche durch den Reinigungsstoff (22) adsorbiert ist, größer als eine bestimmte Menge abgeschätzt ist bzw. wird.

2. Kraftstoffeinspritzsteuersystem für einen Dieselmotor nach Anspruch 1, wobei die Kraftstoffeinspritzsteuermittel (9, 32, 35, 35d) die unterteilte Kraftstoffeinspritzung an bestimmten Intervallen kürzer als etwa 800 Mikrosekunden implementieren.

3. Kraftstoffeinspritzsteuersystem für einen Dieselmotor nach einem der vorangehenden Ansprüche, wobei
die Kraftstoffeinspritzsteuermittel (9, 32, 35, 35d) die bestimmte Menge an Kraftstoff in mehr als zwei Teile für die unterteilte Kraftstoffeinspritzung unterteilen.

4. Kraftstoffeinspritzsteuersystem für einen Dieselmotor nach einem der vorangehenden Ansprüche, wobei die Kraftstoffeinspritzsteuermittel (9, 32, 35, 35d) wenigstens eine korrigierende Steuerung bzw. Regelung einer unterteilten Anzahl, durch welche die Anzahl von Teilen von Kraftstoff, in welche die bestimmte Menge einer Kraftstoffeinspritzung größer variiert ist, und eine korrigierende Steuerung bzw. Regelung eines unterteilten Intervalls implementieren, wodurch die Intervalle der unterteilten Kraftstoffeinspritzung verlängert werden, während für die Menge der Komponenten, welche durch den Reinigungsstoff (22) adsorbiert sind, abgeschätzt ist größer als eine bestimmte Menge zu sein.

5. Kraftstoffeinspritzsteuersystem für einen Dieselmotor nach einem der vorangehenden Ansprüche, wobei der Dieselmotor (1) mit einem Turbolader (25) ausgerüstet ist, welcher arbeitet bzw. operativ ist, um Einlaßluft mit Abgas von dem Dieselmotor (1) aufzuladen, wobei der Turbosuperlader (25) vom Typ variabler Geometrie ist, welcher fähig ist, eine Geschwindigkeit eines Abgasstroms bzw. -flusses zu variieren, welcher in eine Turbine (21) des Turbosuperladers (25) eingebracht ist bzw. wird.

6. Kraftstoffeinspritzsteuersystem für einen Dieselmotor nach einem der vorangehenden Ansprüche, wobei die Kraftstoffeinspritzsteuermittel (9, 32, 35, 35d) eine Luft-Kraftstoff-Verhältnis-Steuerung bzw. -Regelung durchführen, wodurch ein Luft-Kraftstoff-Verhältnis in der Verbrennungskammer (4) geringer als ein stöchiometrisches Luft-Kraftstoff-Verhältnis gemacht ist bzw. wird, um einen Sauerstoffgehalt von Abgas zu verringern, während für eine Menge der Komponenten, welche durch den Reinigungsstoff (22) adsorbiert sind, abgeschätzt ist, größer als die bestimmte Menge zu sein.

## Revendications

1. Système de commande de l'injection de carburant dans un moteur diesel, qui pulvérise du carburant dans une chambre de combustion (4) du moteur diesel (1) à l'aide d'un injecteur (5) de carburant disposé de manière à être situé face à la chambre de combustion (4), ledit système d'injection de carburant comprenant des moyens (9, 32, 35, 35d) de commande de l'injection qui surveillent le couple de sortie demandé au moteur diesel (1), qui déterminent la quantité de carburant qui doit être pulvérisée par l'injecteur (5) de carburant en fonction des conditions de fonctionnement, qui divisent la quantité ainsi déterminée de carburant en une pluralité de portions de carburant et qui actionnent l'injecteur de carburant (5) par intermittence pour qu'il pulvérisé lesdites portions divisées de carburant par injection de niveaux divisés de carburant à des intervalles spécifiques à un instant proche du point mort haut de la course de compression, de manière à empêcher que la combustion dans la chambre de combustion (4) s'arrête,
lesdits moyens (9, 32, 35, 35d) de commande de l'injection du carburant mettant en oeuvre ladite injection divisée du carburant à des intervalles spécifiques dans une plage d'environ 100 microsecondes à environ une milliseconde de manière à réaliser un deuxième tir de ladite injection divisée de carburant à un instant situé après ledit point mort haut de la course de compression et à terminer ladite injection divisée de carburant avant un angle de vilebrequin d'environ 35° après ledit point mort haut de la course de compression,
**caractérisé en ce que**
ledit moteur diesel (1) est doté d'une substance d'épuration (22) prévue dans le conduit d'échappement (20) et qui agit pour adsorber les composants du gaz d'échappement du moteur diesel (1) qui dégradent les performances d'épuration des gaz d'échappement par la substance d'épuration (22) et qui libèrent lesdits composants adsorbés par ladite substance d'épuration (22) à une température supérieure à une température spécifiée pour ainsi épurer les gaz d'échappement du moteur diesel (1), et **en ce que** lesdits moyens (9, 32, 35, 35d) de commande de l'injection des carburants estiment la quantité desdits composants adsorbés par ladite substance d'épuration (22) et mettent en oeuvre ladite injection divisée de carburant lorsque la quantité estimée dudit composant adsorbé par ladite substance d'épuration (22) est supérieure à une quantité spécifiée.

2. Système de commande dé l'injection de carburant d'un moteur diesel selon la revendication 1, dans lequel lesdits moyens (9, 32, 35, 35d) de commande de l'injection de carburant mettent en oeuvre ladite injection divisée du carburant à des intervalles spécifiés plus courts qu'environ 800 microsecondes.

3. Système de commande de l'injection de carburant d'un moteur diesel selon l'une des revendications précédentes, dans lequel lesdits moyens (9, 32, 35, 35d) de commande de l'injection de carburant divisent ladite quantité prédéterminée de carburant en plus de deux parties pour l'injection divisée de carburant.

4. Système de commande de l'injection de carburant d'un moteur diesel selon l'une des revendications précédentes, dans lequel lesdits moyens (9, 32, 35, 35d) de commande de l'injection de carburant mettent en oeuvre au moins une commande de correction du nombre de divisions, qui augmente le nombre de portions de carburant dans lequel la quantité déterminée d'injection de carburant est divisée et une commande de correction de l'intervalle entre les divisions par laquelle lesdits intervalles de ladite injection divisée de carburant sont prolongés lorsque la quantité estimée desdits composants adsorbés par ladite substance d'épuration (22) est supérieure à une quantité spécifiée.

5. Système de commande de l'injection de carburant d'un moteur diesel selon l'une des revendications précédentes, dans lequel ledit moteur diesel (1) est équipé d'un turbocompresseur (25) qui assure une suralimentation dé l'air d'admission à l'aide des gaz d'échappement du moteur diesel (1), ledit turbocompresseur (25) étant d'un type à géométrie variable capable de modifier la vitesse de l'écoulement des gaz d'échappement introduits dans la turbine (21) du turbocompresseur (25).

6. Système de commande de l'injection de carburant d'un moteur diesel selon l'une des revendications précédentes, dans lequel lesdits moyens (9, 32, 35, 35d) de commande de l'injection de carburant réalisent une commande du rapport air-carburant par lequel le rapport air-carburant dans la chambre de combustion (4) est abaissé en dessous du rapport air-carburant stoechiométrique de manière à abaisser la teneur en oxygène des gaz d'échappement lorsque la quantité estimée dudit composant adsorbé par ladite substance d'épuration (22) est supérieure à ladite quantité spécifiée.
